# EUROPEAN PATENT APPLICATION

(11) **EP 4 502 841 A1**
(43) Date of publication of application: **05.02.2025**
(21) Application number: 23188682.1
(22) Date of filing: 31.07.2023
(51) Int. Cl.: G06F 21/55, H04L 9/40

(54) **METHOD AND SYSTEM OF PREDICTION OF VULNERABILITY ATTACKS ON AUTOMATION SYSTEM**

(71) Applicant: Siemens Aktiengesellschaft, 80333 München (DE)
(72) Inventor: ANTONY, Elvis, 90429 Nürnberg (DE); LEELAVATHY, Grace, 635126 Hosur, Tamilnadu (IN); ORUGANTI, Srivathsa Simha, 560100 Bangalore, Karnataka (IN); S, Subramanyam, 641041 Comabatore (IN)
(74) Representative: Isarpatent

(57) **Abstract**

The present invention provides a method and system for predicting a vulnerability attack on an automation system (202). The method (400) comprises receiving a plurality of engineering data objects associated with the automation system (102) and information associated with a plurality of past vulnerability attacks on the automation system (102). The method (400) comprises generating an engineering behavior ontology (505), a vulnerability ontology (506A), and an attack effect ontology (506B) based on the analysis of the plurality of engineering data objects and the information associated with the plurality of past vulnerability attacks on the automation system (102). The method further comprises predicting a vulnerability attack and a set of possible effects of the vulnerability attack based on the determined anomaly with at least one anomaly. The method further comprises outputting a user alert.

## Description

The present invention relates to a field of cybersecurity, and more particularly relates to a method and system for predicting a vulnerability attack on an automation system.

An automation system such as an industrial control systems (ICS) and a supervisory control and data acquisition (SCADA) systems, is configured to manage and control a plurality of industrial processes. However, the automation system is susceptible to a plurality of vulnerability attacks by malicious persons such as computer hackers. The plurality of vulnerability attacks can disrupt operations, and compromise sensitive data stored in the automation system. The plurality of vulnerability attacks pose significant risks to safety, security, and productivity of the automation system.

The automation system may be connected the Internet. Thus, conventionally, the automation system may be exposed to a large variety of threats of the plurality of vulnerability attacks. Traditional security measures such as firewalls, intrusion detection systems (IDS), and antivirus software alone are often insufficient to defend against sophisticated and evolving vulnerability attack threats.

Conventionally, the plurality of vulnerability attacks are neutralized by one or more reactive measures, such as patching one or more vulnerabilities, implementing security controls, and responding to incidents after the plurality of vulnerability attacks occur. Thus, traditional approaches lack a capability of anticipating and preventing the plurality of vulnerability attacks before a plurality of vulnerabilities of the automation systems are exploited. Predictive techniques in the context of the plurality of vulnerability attacks on the automation systems are relatively underdeveloped, leaving critical infrastructures exposed to the risk of zero-day exploits and emerging attack vectors.

In light of above, there exists a need for an efficient method and system for predicting vulnerability attacks on an automation system.

The object of the invention is achieved by an efficient method for predicting vulnerability attacks on an automation system. Advantageously, the proposed method for predicting vulnerability attacks on an automation system offers a proactive and preventive approach to system security. The proposed method utilizes historical system data, real-time monitoring, and threat intelligence feeds to generate predictive models capable of identifying emerging attack patterns and indicators of compromise.

The method presents several key advantages over existing solutions. Firstly, it enables organizations to shift from a reactive security posture to a proactive posture by anticipating vulnerabilities and potential attacks. Secondly, it enhances the overall resilience of automation systems by identifying weak points and enabling timely remediation actions. Thirdly, the method reduces the likelihood of successful attacks, minimizing the associated financial losses, operational disruptions, and reputational damages. Lastly, by facilitating early detection, the proposed method allows security teams to prioritize and allocate resources effectively for incident response and recovery efforts.

In conclusion, the proposed method for predicting vulnerability attacks on an automation system represents a significant advancement in the field of automation system security. By providing industrial plants with a proactive defense mechanism, the proposed method empowers the industrial plants to stay ahead of cyber threats and safeguard critical infrastructures. The proposed method has an ability to predict attacks and vulnerabilities before the vulnerabilities of the automation system can be exploited. Thus, the proposed method holds a potential to revolutionize a way in which automation systems are protected and secured.

The method of predicting the vulnerability attack is implemented on the automation system of an industrial plant. The industrial plant, also known as an industrial facility or industrial complex, is a physical location where a plurality of industrial operations and processes take place. In one example, the industrial plant refers to a facility or site where raw materials are transformed or processed into finished goods or intermediate products through at least one of a manufacturing operation, a production operation, or an assembly operation.

The industrial plant can vary in size and complexity, ranging from small-scale facilities to large industrial complexes. The automation system in the industrial plant refers to a combination of hardware and software components designed to control and monitor industrial processes, machinery, and equipment inside the industrial plant. The automation system is a technology-driven system that aims to enhance operational efficiency, productivity, and safety in manufacturing and industrial environments. The vulnerability attack on the automation system of the industrial plant refers to an exploitation of security weaknesses or vulnerabilities in a software of the automation system. The vulnerability attack aims to compromise an integrity, availability, or confidentiality of the automation system, potentially leading to operational disruptions, equipment damage, or unauthorized access to sensitive data.

In a preferred embodiment, the method comprises receiving, by a processing unit, a plurality of engineering data objects associated with the automation system. The method further comprises receiving by the processing unit, information associated with a plurality of past vulnerability attacks on the automation system. In one example, the plurality of engineering data objects and the information associated with the plurality of past vulnerability attacks are received from a server. In another example, the plurality of engineering data objects and the information associated with the plurality of past vulnerability attacks are received from a user via a user input device such a document scanner, an optical character recognition device such as a mobile phone, or a computer keyboard.

The plurality of engineering data objects comprises information associated with a plurality of software components and a plurality of hardware components of the automation system. Examples of the plurality of software components comprises a plurality of code segments which when executed by the processing unit, controls at least one of a Supervisory Control and Data Acquisition system, a Programmable Logic Controller, a Human-Machine Interface, a Manufacturing Execution System, and distributed Control System in the industrial plant. The plurality of hardware components of the automation system comprises a plurality of Sensors, a plurlaity of Actuators, a plurality of Industrial Communication Networks, and a plurality of Industrial PCs and Servers of the automation system. The plurality of software components further comprises classes, functions, loops, and conditional statements in the plurality of code segments.

The information associated with the plurality of past vulnerability attacks comprises information about one or more vulnerability attacks which have occured on the automation system in the past. In one example, the plurality of past vulnerabilities attacks may have be detected by one or more security consultants in a course of one or more vulnerability sniffing operations conducted by the one or more security consultants on the automation system. The security consultant may be a cyber security expert tasked with identifying one or more vulnerabilities in the automation system.

Each vulnerability attack of the plurality of past vulnerability attack is mounted on a weakness or flaw in a design, an implementation, or a configuration of at least one of the plurality of software components and the plurality of hardware components of the automation system. In one example, each vulnerability attack of the plurality of past vulnerability attack is mounted on an erroneous code segment in the plurality of code segments of the plurality of software components. In otherwords, the plurality of past vulnerability attacks are mounted on one or more vulnerabilities of a plurality of vulnerabilities of the automation system. Each vulnerability of teh plurality of vulnerabilites is weakness/flaw in the automation system. The vulnerability can be a potential entry point through which an attacker can compromise a security, an integrity, or an availability of the automation system.In one example, each vulnerability of the plurality of vulnerabilities is indicative of an erroneous hardware configuration in the plurality of hardware components. Each of the plurality of vulnerabilities is potentially susceptible to a vulnerability attack by a hacker.

In one example, the plurality of vulnerabilities comprises programming errors, misconfigurations, design flaws, or a presence of insecure features in the plurality of software components or the plurality of hardware components. The plurality of vulnerabilities exist in various parts of the automation system, including operating systems, applications, network devices, databases, or firmware.

Examples of information of the plurality of past vulnerability attack includes information associated with each vulnerability of the plurality of vulnerabilities. For example, information associated with each vulnerability includes a vulnerability ID, a Vulnerability Description, a list of Components affected by the vulnerability, a Vulnerability Type, a Severity of the vulnerability, an Exploitability of the vulnerability, a Mitigation Measures deployed to nullify the vulnerability, and a Date at which the vulnerability was exploited. The vulnerability ID is a unique identifier assigned to a specific vulnerability, often using a naming convention like Common Vulnerabilities and Exposures ID. The vulnerability description is a detailed explanation of the vulnerability, including a nature, an impact, and one or more potential risks of the specific vulnerability.

The list of components affected by the vulnerability comprises one or more software components and one or more hardware components of the plurality of software components and of the plurality of hardware component, which were affected by a vulnerability attack mounted on the vulnerability. The vulnerability type of the vulnerability is a categorization of the vulnerability based on one or more characteristics of the vulnerability. For example, the vulnerability type could be a buffer overflow type vulnerability, an SQL injection vulnerability, a cross-site scripting (XSS) vulnerability, or a privilege escalation vulnerability. The severity of the vulnerability is an assessment of the severity or criticality of the vulnerability. The severity is represented using scoring systems like CVSS (Common Vulnerability Scoring System) with ratings such as low, medium, high, or critical. The exploitability of the vulnerability comprises information on whether known exploits or attack vectors are available for the vulnerability.

The mitigation measures of the vulnerability comprises recommendations or guidelines provided by a security consultant on how to mitigate or address the vulnerability. Examples of the mitigation measures may include patches, software updates, configuration changes, or workarounds. The dates of the vulnerability comprises timestamps indicating when the vulnerability is discovered, disclosed, or patched by the one or more security consultants. The information of the plurality of past vulnerability attacks further comprises a business impact and an effect of each of the plurality of past vulnerability attacks. In one example, information about the plurality of past vulnerability attacks is received by the processing unit in the form of text files which comprise information associated the plurality of vulnerabilities.

In one example, the plurality of engineering data objects comprises one or more textual documents which comprise information associated the plurality of software components and the plurality of hardware components. Examples of the plurality of engineering data objects comprises one or more textual documents comprising a technical documentation, a sourcecode, a manual, and a specification of the automation system from the industrial plant. Such textual documents comprises information about the plurality of software components and the plurality of hardware components, and one or more functionalities of the plurality of software components and the plurality of hardware components. Such textual documents further comprise information of a manner of connection and communication of the plurality of software components and the plurality of hardware components with each other. Advantageously, the one or more security consultants is saved from a task of manually reading through the plurality of engineering data objects, thus saving labour and time.

In other words, the plurality of engineering data objects comprise information associated with the plurality of software components and the plurality of hardware components of the automation system. In another example, the plurality of engineering data objects comprises text files, binary files and images scans of physical technical documents. The plurality of engineering data objects comprises information about the plurality of software components such as tags, User defined datatypes (UDTs), blocks, libraries, and their interconnections with other sub systems like Human machine interfaces (HMI), OPC UA and other web servers and one or more connections of the plurality of software components to the plurality of hardware components. The plurality of engineering data objects further comprises information about behavior of the plurality of software components and the plurality of hardware components at a normal operation of the automation system. The normal operation of the automation system is indicative of a state of operation of the automation system when no vulnerabilities are present in the automation system.

The plurality of engineering data objects further comprises details about instruction set used by the plurality of hardware components. The plurality of engineering data further comprises behavior of the plurality of hardware components such as a maximum, a minimum and an optimum scan cycle used by the plurality of hardware components to execute the plurality of software components. The plurality of engineering data objects comprises information about behavioral modality of trio namely the plurality of software components, the plurality of hardware components, and the plurality of connections between the plurality of software components and the plurality of hardware components. Advantageously, the behaviour of the plurality of software components and the plurality of software components are automatically analyzed by the processing unit. Thus, labour and effort required to manually analyze the plurality of engineering data objects is eradicated.

In one example, information about the behavior of the plurality of software components and the plurality of hardware components comprises information about a plurality of dependencies between a plurality of input parameters and a plurality of output parameters associated with the plurality of hardware components and the plurality of software components. The plurality of dependencies between the plurality of input parameters and the plurality of output parameters is indicative of a ratio between at least one input parameter of the plurality of input parameters to at least one output parameter of the plurality of output parameters.

The plurality of input parameters comprise data received by the plurality of software components and the plurality of hardware components under the normal operation of the automation systems. The plurality of output parameters comprise data output by the the plurality of software components and the plurality of hardware components under the normal operation of the automation systems.

In one example, the plurality of input parameters comprises information about a telemetry data, a user input, a sensor input, and a user configuration received by the plurality of software components and the plurality of hardware components. The plurality of input parameters further comprises information about a code segment executed by the plurality of software components and the plurality of hardware components. In another example, the plurality of output parameters comprises information about a processing speed, a memory usage, an output signal, and a list of system errors generated by the plurality of software components and the plurality of hardware components.

In another example, the plurality of input parameter comprise information associated with a plurality of inputs received by the automation system. Examples of plurality of input parameters include information about a Network Traffic, a User Input, a System Call, a File Operation and an API Call received by the plurality of software components and the plurality of hardware components. In another example, the plurality of output parameters are indicative of a plurality of outputs of the automation system. Examples of plurality of output parameters include information about a Log File, a Network Connection, a Process Information, a File Integrity and an API Call associated with the plurality of software components and the plurality of hardware components.

The method further comprises analysing, by the processing unit, the plurality of engineering data objects and the information about the plurality of past vulnerability attacks by application of a natural language processing algorithm on the plurality of engineering data objects and the information on the plurality of past vulnerability attacks on the automation system. The natural language processing algorithm is a computational method or technique designed to process and analyze human language. The NLP algorithm is configured to enable computers to understand, interpret, and generate natural language text or speech. The NLP algorithm employ a plurality of techniques from linguistic rules to statistical models and machine learning. Examples of the natural language processing algorithm include but is not limited to a Stanford Parser algorithm, a Spacy algorithm, a CoreNLP algorithm, an OpenNLP algorithm, a Gensim algorithm, a Hugging Face Transformers algorithm, and a Stanford Part-of-Speech Tagger (POS) algorithm.

The method further comprises generating, by the processing unit, a first set of tokens from the plurality of engineering data objects based on the analysis. Each token of the first set of tokens comprises information associated with a specific data object of the plurality of engineering data objects. The processing unit is configured to generate the first set of tokens by application of a tokenization algorithm on the analysed plurality of engineering data objects. The tokenization algorithm is a computational method which splits a text present in the plurality of engineering data objects, into individual words, phrases, or sentences, known as tokens. The tokenization algorithm comprises a plurality of rules and patterns to segment the text effectively. Examples of the tokenization algorithm comprises a Rule-based tokenization algorithm, a white space tokenization algorithm, a Regular expression tokenization algorithm, a Statistical tokenization algorithm, a Maximum entropy tokenization algorithms, and a Neural network-based tokenization algorithms.

The method further comprises applying, by the processing unit, a dependency parsing algorithm on the first set of tokens to analyze a syntactic structure of interdependencies between one or more tokens of the first set of tokens. In another example, the dependency parsing algorithm is applied on the text comprised within the plurality of engineering data objects. The dependency parsing algorithm is configured to identify a plurality of grammatical relationships between two or more tokens of the first set of tokens and the grammatical relationships are represented by the dependency parsing algorithm as a dependency tree. Thus, the processing unit is configured to generate a plurality of dependency trees. Each dependency tree of the plurality of dependency trees is representative of the plurality of grammatical relationships between two or more tokens of the first set of tokens. It is noted that each token of the first set of tokens is indicative of information about the plurality of software components and the plurality of hardware components. Thus, the plurality of grammatical relationships between the first set of tokens is indicative of the plurality of dependencies between two or more components in the plurality of software components and the plurality of hardware components. Since the plurality of engineering data objects comprise information about the plurality of input parameters and the plurality of output parameters, the plurality of grammatical relationships between the first set of tokens is further indicative of the plurality of dependencies between the plurality of input parameters and the plurality of output parameters.

The method further comprises extracting, by the processing unit, information associated with the plurality of software components and the plurality of hardware components of the automation system from the first set of tokens. In one example, the processing unit is configured to filter the first set of tokens with one or more named entity recognition (NER) algorithms to identify mentions of the plurality of software components and the plurality of hardware components in the plurality of tokens.

The method further comprises analyzing, by the processing unit, the plurality of dependencies in the plurality of dependency trees and the identified mentions of the plurality of software components and the plurality of hardware components by application of a semantic role labelling algorithm on the first set of tokens. The semantic role labelling algorithm is configured to assign semantic roles to the identified mentions of the plurality of hardware components and the plurality of software components based on the plurality of dependency trees. The semantic roles of each component of the plurality of hardware components and the plurality of software components is indicative of a relationship of each component with other components of the plurality of hardware components and the plurality of software components. Examples of the semantic role labelling algorithms include, but is not limited to AllenNLP Algorithm or PropBank project algorithm.

The method further comprises analyzing, by the processing unit, the plurality of grammatic relationships and the plurality of assigned semantic roles to determine a plurality of interconnections between tokens in the first set of tokens. The plurality of interconnections between tokens among the first set of tokens is indicative of a plurality of interdependencies between behaviour of the plurality of software components and the plurality of hardware components. For example, the plurality of interdependencies are indicative of the plurality of dependencies between the plurality of input parameters and the plurality of output parameters associated with the plurality of software components and the plurality of hardware components.

For example, a dependency between an input parameter and an output parameter of at least one software component or hardware component in at least one dependency tree of the plurality of dependency trees, is indicative of a interdependency between the software component and the hardware component. In other words, the method comprises generating, by the processing unit, a first map between the generated first set of tokens based on an analysis of the generated first set of tokens. The first map comprises the generated plurality of interconnections between two or more tokens of the first set of tokens. In one example, the first map is stored as a plurality of knowledge graph triples.

The method further comprises generating, by the processing unit, a first knowledge graph to represent the determined plurality of interconnections between two or more tokens of the first set of tokens. In other words, the generated first knowledge graph comprises information about the plurality of interdependencies between the plurality of hardware components and the plurality of software components.

In one example, the generated first knowledge graph comprises a plurality of nodes and a plurality of edges. Each node of the plurality of nodes comprises information associated with at least one of a specific hardware component or a specific software component of the plurality of software components and the plurality of hardware components. In one example, a plurality of graph database technologies or graph representation formats like such as SPARQL and Resource Description Framework is used to store data in and manage the generated first knowledge graph. The generated first knowledge graph is an engineering behaviour ontological schema. In other words, the method further comprises generating the engineering behavior ontological schema based on an analysis of the plurality of engineering data objects and the information associated with the plurality of past vulnerability attacks.

In one example, the plurality of software components comprises a plurality of code segments in a PLC code and the information about the plurality of hardware components comprises information associated with a performance of the plurality of hardware components when each hardware component executes the plurality of code segments. In such a case, the engineering behaviour ontological schema is a knowledge graph representation comprising information associated with a plurality of interconnections and dependencies between a plurality of code segments in the PLC code, and a performance of the plurality of hardware objects associated with the plurality of code segments. In another example, the plurality of engineering data objects comprises information associated with the plurality of input parameters and the plurality of output parameters associated with each of the plurality of software components and the plurality of hardware components of the automation system. In such a case, the engineering behaviour ontological schema comprises information associated with the plurality of dependencies between the plurality of input parameters and the plurality of output parameters, when during a state of the automation system in which a vulnerability is not present in the automation system. Advantageously, the processing unit is configured to automatically generate the engineering behaviour ontological schema which comprises information about a behaviour of the plurality of hardware components and the plurality of software components under the normal operation of the automation system.

The method further comprises analyzing, by the processing unit, the plurality of engineering data objects and the information about the plurality of past vulnerability attacks by application of the NLP algorithm on the information associated with the plurality of past vulnerability attacks. The method further comprises generating, by the processing unit a second set of tokens from the information associated with the plurality of past vulnerability attacks based on analysis of information associated with the plurality of past vulnerability attacks. Each token of the second set of tokens comprises information associated with a specific past vulnerability attack of the plurality of past vulnerability attacks. The processing unit is configured to generate the second set of tokens by application of the tokenization algorithm on the analysed plurality of engineering data objects and the information associated with the plurality of past vulnerability attacks.

The method further comprises applying, by the processing unit, a dependency parsing algorithm on the second set of tokens to analyze a syntactic structure of one or more tokens of the second set of tokens. The dependency parsing algorithm is configured to identify a plurality of grammatical relationships between two of more tokens of the second set of tokens and the grammatical relationships are represented by the dependency parsing algorithm as a dependency tree. Thus, the processing unit is configured to generate a plurality of dependency trees. Each dependency tree of the plurality of dependency trees is representative of the plurality of grammatical relationships between two or more tokens of the second set of tokens. It is noted that each token of the second set of tokens is indicative of information about one or more past vulnerability attacks of the plurality of vulnerability attacks.

The method further comprises extracting, by the processing unit, information associated with the plurality of past vulnerability attacks. In one example, the processing unit is configured to filter the second set of tokens with one or more named entity recognition (NER) algorithms to identify mentions of each vulnerability attack of the plurality of past vulnerability attacks. In one example, the identified mentions of each vulnerability attack comprises the vulnerability ID of the vulnerability attack.

The method further comprises analyzing, by the processing unit, a plurality of dependencies in the plurality of dependency trees and the identified mentions of the plurality of past vulnerability attacks by application of a semantic role labelling algorithm. The semantic role labelling algorithm is configured to assign semantic roles to the identified mentions of the plurality of past vulnerability attacks based on the plurality of dependency trees. The semantic roles of each component of the plurality of past vulnerability attacks is indicative of an effect of plurality of past vulnerability attacks on the plurality of hardware components and the plurality of software components.

The method further comprises analyzing, by the processing unit, the plurality of grammatic relationships and the plurality of assigned semantic roles to determine a plurality of interconnections between two or more tokens in the first set of tokens and the second set of tokens. The plurality of interconnections between one or more tokens among the second set of tokens is indicative of a plurality of interdependencies between behaviour of the plurality of software components and the plurality of hardware components and the plurality of past vulnerability attacks. For example, the plurality of interdependencies are indicative of the plurality of interdependencies between the plurality of past vulnerability attacks with a behaviour of the plurality of software components and the plurality of hardware components. For example, the plurality of interdependencies are indicative of variations in the plurality of input parameters and the plurality of output parameters in the event of at least one vulnerability attack of the plurality of past vulnerability attacks.

In another example, the plurality of interdependencies are indicative of a ratio between the plurality of input parameters and the plurality of output parameters in the event of at least one vulnerability attack of the plurality of past vulnerability attacks. In yet another example, the plurality of interdependencies comprises information about a plurality of anomalies in the plurality of input parameters and the plurality of output parameters during each of the plurality of past vulnerability attacks.

The method further comprises generating, by the processing unit, a second knowledge graph to represent the determined plurality of interconnections between two or more tokens of the first set of tokens and the second set of tokens. It is noted that the second set of tokens comprises information about the plurality of past vulnerability attacks. In other words, the generated second knowledge graph comprises information about the plurality of interdependencies between the plurality of hardware components and the plurality of software components during each of the plurality of past vulnerability attacks.

Furthermore, the generated second knowledge graph comprises information associated with the plurality of anomalies in values of the plurality of input parameters and the plurality of output parameters of the automation system. The second knowledge graph further comprises information associated with a mapping between the plurality of anomalies, the plurality of input parameters, and the plurality of output parameters. In other words, the method comprises generating, by the processing unit, a second map between the generated second set of tokens based on an analysis of the generated second set of tokens.

In one example, the second generated knowledge graph comprises a plurality of nodes and a plurality of edges. Each node of the plurality of nodes comprises information associated with a specific vulnerability attack of the plurality of vulnerability attacks or a specific component of the plurality of software components and the plurality of hardware components. In one example, a plurality of graph database technologies or graph representation formats like such as SPARQL and Resource Description Framework is used to store data in and manage the generated knowledge graph. The generated second knowledge graph is a vulnerability ontological schema. In other words, the method further comprises generating the vulnerability ontological schema based an analysis of the plurality of engineering data ob-jects and information associated with the plurality of past vulnerability attacks.

In one example, the vulnerability ontological schema comprises information associated with the plurality of anomalies associated with the plurality of past vulnerability attacks. Examples of the plurality of anomalies associated each of the plurality of past vulnerability attacks includes one or more anomalies in the plurality of input parameters and the plurality of output parameters of the automation system during each vulnerability attack of the plurality of past vulnerability attacks. An anomaly is indicative of a variation of the plurality of input parameters and the plurality of output parameters from one or more parameter values indicated by the engineering behaviour ontological schema. The vulnerability ontological schema comprises information about a plurality of dependencies between the plurality of anomalies and the plurality of past vulnerability attacks. Thus, each anomaly of the plurality of anomalies is mapped by the vulnerability ontological schema to a specific past vulnerability attacks of the plurality of past vulnerability attacks.

The method further comprises analyzing the second set of tokens, by the processing unit, to extract information associated with an effect of each vulnerability attack of the plurality of past vulnerability attacks on the automation system. The method further comprises generating, a third knowledge graph comprising information associated with an effect of each vulnerability attack, of the plurality of past vulnerability attacks, on the plurality of software components and the plurality of hardware components. In one example, the third knowledge graph comprises information associated effect of each of the plurality of past vulnerability attacks on the plurality of hardware components and the plurality of software components.

In one example, the information associated with effect of each of the plurality of past vulnerability attacks comprises information associated with at least one of a stoppage, a slowness, a crash, a malfunction, a data theft, and a code replication, a list of inputs injected by the vulnerability into the automation system, a change in workflow of the automation system caused by the vulnerability attack, a change in process of the automation system by the vulnerability attack, a change in processing power of the automation system which has occurred on the automation system as a result of each of the plurality of past vulnerability attacks. It is noted that, the effect of each of the plurality of past vulnerability attacks is manually recorded by the security consultant during the one or more vulnerability sniffing operations conducted by the security consultant on the automation system.

In one example, the third generated knowledge graph comprises a plurality of nodes and a plurality of edges. Each node of the plurality of nodes comprises information associated with an effect of a specific vulnerability attack of the plurality of vulnerability attacks on a specific component of the plurality of software components and the plurality of hardware components. In one example, the third knowledge graph comprises information associated each of the plurality of past vulnerability attacks. The effect of the plurality of past vulnerability attacks include, but is not limited to a list of inputs injected by the vulnerability into the automation system, a change in workflow of the automation system caused by the vulnerability attack, a change in process of the automation system by the vulnerability attack, a change in processing power of the automation system caused by the vulnerability attack. Advantageously, the processing unit is configured to automatically generate the attack effect ontological schema which comprises information about an effect of each of the plurality of past vulnerability attacks.

The generated third knowledge graph is an attack effect ontological schema. In other words, the method further comprises generating, by the processing unit, the attack effect ontological schema. In one example, the attack effect ontological schema comprises information associated with an effect of each of the plurality of past vulnerability attacks on the plurality of software components and the plurality of hardware components. For example, information stored in the attack effect ontological schema comprises but is not limited to a list of inputs injected by the vulnerability into the automation system, a change in workflow of the automation system caused by the vulnerability attack, a change in process of the automation system by the vulnerability attack, a change in processing power of the automation system caused by the vulnerability attack. Furthermore, the attack effect ontological schema comprises information associated with a plurality of interdependencies between the effect of each vulnerability attack of the plurality of past vulnerability attacks on the plurality of software components and the plurality of hardware components. In other words, the attack effect ontological schema comprises information associated with the effect of each of the plurality of past vulnerability attacks on the plurality of hardware components and the plurality of software components.

The method further comprises receiving, by the processing unit, a set of input parameters and a first set of output parameters from the automation system. The set of input parameters comprises a plurality of inputs received by the plurality of software components and the plurality of hardware components. Examples of the set of input parameters include, but is not limited to a sensor input, a user input, a workflow detail, a plurality of scan cycle parameters associated with the plurality of software components and the plurality of hardware components. The first set of output parameters comprises information about memory usage of the plurality of software components and the plurality of hardware components. The first set of output parameters further comprises a data output, a processing power consumption data, and information about a processing speed of the plurality of software components and the plurality of hardware components.

The method further comprises applying, by the processing unit, the engineering behaviour ontological schema on the received set of input parameters and the first set of output parameters. In one example, to apply the engineering behavior ontological schema on the received set of input parameters and the received first set of output parameters, the processing unit is configured to query the engineering behavior ontological schema based on the received set of input parameters. It is noted that the engineering behaviour ontological schema comprises information associated with the plurality of dependencies between the plurality of input parameters and the plurality of output parameters of the automation system under a normal operation of the automation system. The normal operation of the automation system is a circumstance at which the automation system is not subject to an potential vulnerability attack by a malicious entity such as a hacker. Thus, by querying the engineering behaviour ontological schema, the processing unit is configured to generate a second set of output parameters based on the set of input parameters. The second set of output parameters are indicative of one or more output parameters which are generated by the automation system, when the automation system processes the set of input parameters in a normal operation of the automation system. The normal operation of the automation system is indicative of an absence of any potential vulnerability attack on the automation system. Advantageously, the processing unit is enabled to compare the first set of output parameters with the second set of output parameters to detect one or more anomalies in the first set of output parameters and thereby detect an potential vulnerability attack on the automation system.

The processing unit is further configured to generate the second set of output parameters by querying the engineering behavior ontological schema using the received set of input parameters. The method further comprises comparing, by the processing unit, the first set of output parameters with the second set of output parameters. The processing unit is configured to compare the first set of output parameters and the second set of output parameters by application of a comparison algorithm on the first set of output parameters and the second set of output parameters. Examples of the comparison algorithm comprises, but is not limited to mean absolute error based algorithm, Root Mean Squared Error based algorithm, and a cosine similarity algorithm.

The method further comprises determining, by the processing unit, at least one anomaly in the first set of output parameters based on the comparison. The at least one anomaly is indicative of a difference between the first and the second set of output parameters. In other words, the determined at least one anomaly is indicative of a deviation of a behaviour of the automation system from a behaviour expressed in the engineering behaviour ontological schema. Thus, the detected at least one anomaly is an indication of an potential vulnerability attack on the automation system.

The method further comprises comparing, by the processing unit, the determined at least one anomaly with the plurality of anomalies depicted in the vulnerability ontological schema. It is noted that each anomaly of the plurality of anomalies is associated with a specific vulnerability attack of the plurality of past vulnerability attacks. Furthermore, each node of the plurality of nodes of the vulnerability ontology schema is representative of a specific vulnerability attack of the plurality of past vulnerability attacks. In one example, the determined at least one anomaly is compared with the plurality of anomalies by application of a similarity algorithm on the determined at least one anomaly and the plurality of anomalies. Examples of the similarity algorithm includes a cosine similarity algorithm and a Jaccard similarity algorithm. The similarity algorithm is configured to determine a similarity of the at least one anomaly to a set of anomalies stored in the vulnerability ontology schema. In a case where the at least one anomaly is similar to the set of anomalies, the similarity algorithm is configured to match the at least one anomaly to the set of anomalies.

The method further comprises matching, by the processing unit, the determined at least one anomaly with at least one node of the plurality of nodes of the vulnerability ontology schema. The at least one node of the plurality of nodes comprises information associated with the set of anomalies which are similar to the determined at least one anomaly. Furthermore, the at least one node of the plurality of nodes comprises information associated with a set of past vulnerability attacks which caused the set of anomalies in the past. The method further comprises detecting, by the processing unit, an potential vulnerability attack on the automation system based on the detected at least one node of the plurality of nodes. In other words, the method further comprises detecting an potential vulnerability attack on the automation system based on the detected at least one anomaly in the automation system.

The method further comprises comparing, by the processing unit, the detected at least one node of the vulnerability ontological schema with each node of the attack effect ontological schema based on an analysis of the detected potential vulnerability attack and the vulnerability ontological schema. In one example, the detected at least one node of the vulnerability ontological schema is compared with each node of the attack effect ontological schema by application of a similarity algorithm on the detected at least one node of the vulnerability ontological schema and each node of the attack effect ontological schema. Examples of the similarity algorithm includes a cosine similarity algorithm and a Jaccard similarity algorithm.

The method further comprises detecting at least one node of the attack effect ontology schema based on the comparison. The detected at least one node of the attack effect ontology schema is indicative of information associated with a list of effects caused by the determined set of past vulnerability attacks on the automation system in the past. In other words, the processing unit is configured to detect a list of effects caused by the determined set of past vulnerability attacks on the automation system. Since the detected potential vulnerability attack is similar to the determined set of past vulnerability attacks, the list of effect caused by the the determined set of past vulnerability attacks is indicative of a set of possible effects of the potential vulnerability attack. The method further comprises determining the set of possible effects of the potential vulnerability attack based on an analysis of the at least one node of the attack effect ontology schema. In other words, the method further comprises detecting, by the processing unit (202), a vulnerability attack and a set of possible effects of the vulnerability attack based on the determined at least one anomaly.

In one example, the information associated with the set of possible effects caused by the potential vulnerability attack comprises information associated with at least one of a stoppage, a slowness, a crash, a malfunction, a data theft, and a code replication, a list of inputs injected by the vulnerability into the automation system, a change in workflow of the automation system which may be caused by the potential vulnerability attack, a change in process of the automation system by the potential vulnerability attack, a change in processing power of the automation system which has occurred on the automation system as a result of the potential vulnerability attack. Furthermore, the information associated with the set of possible effects of the potential vulnerability attack comprises a list of components of the plurality of software components and the plurality of hardware components affected by each of the potential vulnerability attack. Advantageously, the processing unit is configured to generate a list of possible effects of the potential vulnerability attack on the automation system. Thus, a security consultant is enabled to take appropriate steps to neutralize the ongoign vulnerability attack.

The method further comprises initiating, by the processing unit, a vulnerability sniffing operation on the automation system based on the detection of the potential vulnerability attack and the detected set of possible effects of the potential vulnerability attack. The vulnerability sniffing operation refers to a process of actively scanning the automation system to identify vulnerabilities or weaknesses that could potentially be exploited by malicious actors. Examples of the vulnerability sniffing operation includes, but is not limited to Port Scanning based vulnerability sniffing operation, Vulnerability Scanners based vulnerability sniffing operation, Network Mapping based vulnerability sniffing operation, and Web Application Scanning based vulnerability sniffing operation. The vulnerability sniffing operation is executed to validate a presence of the potential vulnerability attack on the automation system.

The method further comprises validating, by the processing unit, the detected vulnerability attack based on a result of the vulnerability sniffing operation. In one example, the result of the vulnerability sniffing operation indicates a presence of a vulnerability in the automation system. In such a case, the detected potential vulnerability attack is validated by the processing unit. Advantageously, the processing unit initiates the vulnerability sniffing operation based on the detection of the potential vulnerability attack on the automation system.

The method further comprises generating, by the processing unit, a user alert based on the validation of the detected potential vulnerability attack on the automation system. In one example, the user alert is at least one of a voice based, a image based or a text based user alert. The method further comprises outputting, by the processing unit, the generated user alert comprising information about the detected vulnerability attack and the detected set of possible effects of the detected potential vulnerability attack to a user. In one example, the generated user alert is output by the processing unit via an output device such as a computer monitor.

In one example, the generated user alert comprises information associated with the predicted potential vulnerability attack. For example, the information associated with the detected potential vulnerability attack comprises information associated with a specific vulnerability of the plurality of vulnerabilities. The information associated with the specific vulnerability includes the vulnerability ID, the Vulnerability Description, the list of Components affected by the vulnerability, the Vulnerability Type, the Severity of the vulnerability, the Exploitability of the vulnerability, the Mitigation Measure deployed in the past to nullify the vulnerability, and the Date at which the vulnerability was exploited by a hacker to conduct at least one vulberability attack of the plurality of past vulnerability attacks. In other words, the method further comprises outputting at least one mitigation measure deployed by the

In one example, the generated user alert comprises information associated with the detected vulnerability attack. For example, the information associated with the detected vulnerability attack comprises information associated with a specific vulnerability of the plurality of vulnerabilities. The information associated with the specific vulnerability includes the vulnerability ID, the Vulnerability Description, the list of Components affected by the vulnerability, the Vulnerability Type, the Severity of the vulnerability, the Exploitability of the vulnerability, the Mitigation Measure deployed in the past to nullify the vulnerability, and the Date at which the vulnerability was exploited by a hacker to conduct at least one vulnerability attack of the plurality of past vulnerability attacks.

The object of the present invention is also achieved by an automation system configured to detect vulnerability attacks on the automation system. The automation system comprises a processing unit and a memory coupled to the processor. The memory comprises a vulnerability intelligence module stored in the form of machine-readable instructions executable by the processor. The vulnerability intelligence module is configured for performing the method as described above.

The object of the present invention is also achieved by a computer-program product having machine-readable instructions stored therein, that when executed by one or more processor(s), cause the one or more processor(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable of predicting vulnerability attacks on an automation system, according to an embodiment of the present invention;
- FIG 2: is a block diagram of an automation system, such as those shown in FIG. 1, in which an embodiment of the present invention can be implemented;
- FIG 3: is a block diagram of an vulnerability intelligence module, such as those shown in FIG 2, in which an embodiment of the present invention can be implemented;
- FIG 4A-F: is a process flowchart illustrating an exemplary method of automatically predicting vulnerability attacks on the automation system, according to an embodiment of the present invention; and
- FIG 5: is a schematic representation of an exemplary process of predicting an potential vulnerability attack on an automation system, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

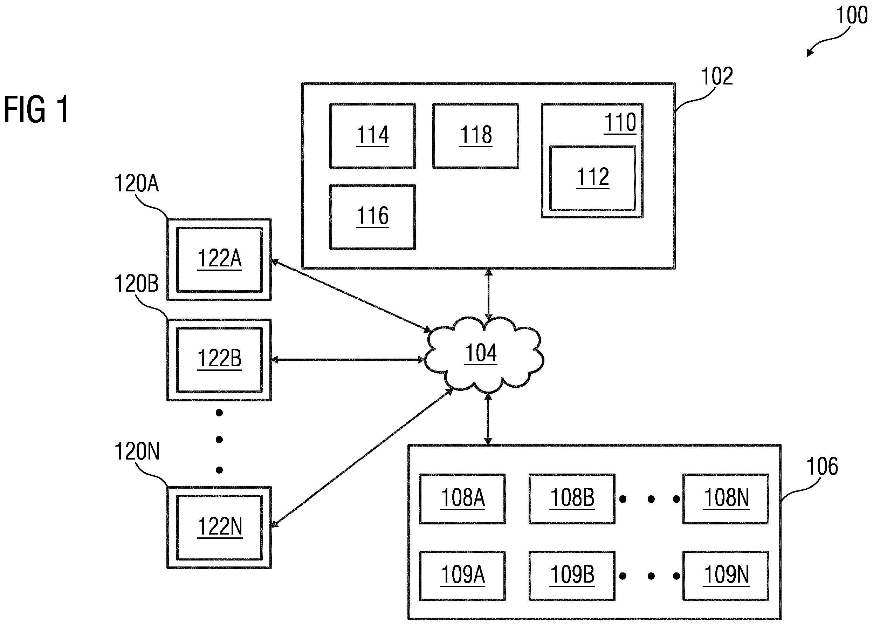

FIG 1 is a block diagram of an industrial environment 100 capable of automatic prediction of vulnerability attacks on an industrial plant 106, according to an embodiment of the present invention. In FIG 1, the industrial environment 100 includes an automation system 102, and one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The automation system 102 is communicatively connected to the industrial plant 106 via the network 104 (such as Local Area Network (LAN), Wide Area Network (WAN), Wi-Fi, Internet, any short range or wide range communication). Examples of the industrial plant 106 includes, a power plant, a manufacturing plant, and a water treatment plant. The automation system 102 is also connected to the one or more client devices 120A-N via the network 104.

The one or more client devices 120A-N may be a desktop computer, laptop computer, tablet, smart phone and the like. Each of the one or more client devices 120A-N is provided with a user interface 122A-N. For example, the one or more client devices 120A-N can access the engineering system 102 for inputting information about a plurality of past vulnerability attacks to the database 118. The one or more client devices 120A-N can access cloud applications. Throughout the specification, the terms "client device" and "user device" are used interchangeably.

The automation system 102 may be a standalone server deployed at a control station or may be a remote server on a cloud computing platform. In a preferred embodiment, the automation system 102 may be a cloud-based automation system. The engineering system 102 may comprise a platform 110 (such as a cloud computing platform), an vulnerability intelligence module 112, a server 114 including hardware resources and an operating system (OS), a network interface 116 and the database 118. The network interface 116 enables communication between the automation system 102, the industrial plant 106, and the one or more client device(s) 120A-N. The server 114 may include one or more servers on which the OS is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. In one example, the server 114 stores a plurality of engineering data objects and information associated with a plurality of past vulnerability attacks on the automation system.

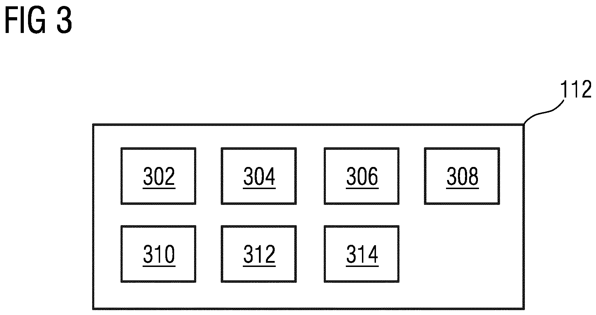

The platform 110 enables functionalities such as data reception, data processing, data rendering, data communication, etc. using the hardware resources and the OS of the servers 114 and delivers the aforementioned services using the application programming interfaces deployed therein. The platform 110 may comprise a combination of dedicated hardware and software built on top of the hardware and the OS. The platform 110 may further comprise a vulnerability intelligence module 112 configured for automatically detecting a vulnerability attack on the automation system 102. Details of the vulnerability intelligence module 112 is explained in FIG. 3.

The industrial plant 106, also known as an industrial facility or industrial complex, is a physical location where a plurality of industrial operations and processes are executed. In one example, the industrial plant 106 refers to a facility or site where raw materials are transformed or processed into finished goods or intermediate products through at least one of a manufacturing operation, a production operation, or an assembly operation.

The industrial plant 106 can vary in size and complexity, ranging from small-scale facilities to large industrial complexes. The automation system 102 of the industrial plant 106 refers to a combination of the plurality of hardware components 108A-N and the plurality of software components 109A-N designed to control and monitor industrial processes, machinery, and equipment inside the industrial plant. The automation system is a technology-driven system that aims to enhance operational efficiency, productivity, and safety in manufacturing and industrial environments. The vulnerability attack on the automation system 102 of the industrial plant 106 refers to an exploitation of security weaknesses or vulnerabilities in a software of the automation system 102. The vulnerability attack aims to compromise an integrity, availability, or confidentiality of the automation system, potentially leading to operational disruptions, equipment damage, or unauthorized access to sensitive data. FIG. 1 further depicts a plurality of hardware components 108A-N and a plurality of software components 109A-N of the industrial plant 106.

Examples of the plurality of software components 109A-N comprises a plurality of code segments which when executed by a processing unit, controls at least one of a Supervisory Control and Data Acquisition system, a Programmable Logic Controller, a Human-Machine Interface, a Manufacturing Execution System, and distributed Control System. The plurality of hardware components 108A-N of the automation system comprises a plurality of Sensors, a plurlaity of Actuators, a network gate, a router device, a mobile phone, a plurality of Industrial Communication Networks, and a plurality of Industrial PCs and Servers. The plurality of software components further comprises classes, functions, loops, and conditional statements in the plurality of code segments.

The database 118 stores the information relating to the technical installation and the one or more client device(s) 120AN. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the platform 110. The database 118, according to another embodiment of the present invention, is a location on a file system directly accessible by the vulnerability in-tellgence module 112. The database 118 is configured to store the plurality of engineering data objects associated with the plurality of hardware components 108A-N, the plurality of software components 109A-N and the like.

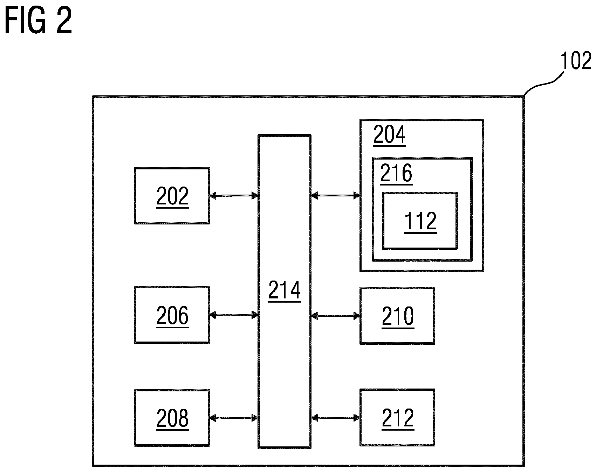

FIG 2 is a block diagram of an automation system 102, such as those shown in FIG 1, in which an embodiment of the present invention can be implemented. In FIG 2, the automation system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes the remodeller module 112 stored in the form of machine-readable instructions on any of the above-mentioned storage media and may be in communication with and executed by the processor(s) 202.

When executed by the processing unit 202, the vulnerability intelligence module 112 causes the processing unit 202 to receive a plurality of engineering data objects associated with the automation system 102. The vulnerability intelligence module 112 further causes the processing unit 202 to receive information associated with a plurality of past vulnerability attacks on the automation system 106. In one example, the plurality of engineering data objects and the information associated with the plurality of past vulnerability attacks are received from the server 114. In another example, the plurality of engineering data objects and the information associated with the plurality of past vulnerability attacks are received from a user via a user input device such as the one or more client devices 120A-N.

The plurality of engineering data objects comprises information associated with the plurality of software components 109A-N and the plurality of hardware components 108A-N of the automation system 102.

The information associated with the plurality of past vulnerability attacks comprises information about one or more vulnerability attacks on a plurality of vulnerabilities in the automation system. In one example, the plurality of vulnerabilities may be detected by one or more security consultants in a course of one or more vulnerability sniffing operations conducted by the one or more security consultants on the automation system. The security consultant may be a cyber security expert tasked with identifying one or more vulnerabilities in the automation system.

Each vulnerability of the plurality of vulnerabilities is indicative of a weakness or flaw in a design, an implementation, or a configuration of at least one of the plurality of software components and the plurality of hardware components of the automation system. In one example, each vulnerability of the plurality of vulnerabilities is indicative of an erroneous code segment in the plurality of code segments of the plurality of software components. In another example, each vulnerability of the plurality of vulnerabilities is indicative of an erroneous hardware configuration in the plurality of hardware components. Each of the plurality of vulnerabilities is potentially susceptible to a vulnerability attack by a hacker. Thus, a vulnerability is a potential entry point through which an attacker can compromise a security, an integrity, or an availability of the automation system.

In one example, the plurality of vulnerabilities comprises programming errors, misconfigurations, design flaws, or a presence of insecure features in the plurality of software components or the plurality of hardware components. The plurality of vulnerabilities exist in various parts of the automation system, including operating systems, applications, network devices, databases, or firmware.

Examples of information of the plurality of past vulnerability attack includes information associated with each vulnerability of the plurality of vulnerabilities. For example, information associated with each vulnerability includes a vulnerability ID, a Vulnerability Description, a list of Components affected by the vulnerability, a Vulnerability Type, a Severity of the vulnerability, an Exploitability of the vulnerability, a Mitigation Measure deployed to nullify the vulnerability, and a Date at which the vulnerability was exploited. The vulnerability ID is a unique identifier assigned to a specific vulnerability, often using a naming convention like Common Vulnerabilities and Exposures ID. The vulnerability description is a detailed explanation of the vulnerability, including a nature, an impact, and one or more potential risks of the specific vulnerability.

The list of components affected by the vulnerability comprises one or more software components and one or more hardware components of the plurality of software components and of the plurality of hardware component, which were affected by a vulnerability attack mounted on the vulnerability. The vulnerability type of the vulnerability is a categorization of the vulnerability based on one or more characteristics of the vulnerability. For example, the vulnerability type could be a buffer overflow type vulnerability, an SQL injection vulnerability, a cross-site scripting (XSS) vulnerability, or a privilege escalation vulnerability. The severity of the vulnerability is an assessment of the severity or criticality of the vulnerability. The severity is represented using scoring systems like CVSS (Common Vulnerability Scoring System) with ratings such as low, medium, high, or critical. The exploitability of the vulnerability comprises information on whether known exploits or attack vectors are available for the vulnerability.

The mitigation measures of the vulnerability comprises recommendations or guidelines provided by a security consultant on how to mitigate or address the vulnerability. Examples of the mitigation measures may include patches, software updates, configuration changes, or workarounds. The dates of the vulnerability comprises timestamps indicating when the vulnerability is discovered, disclosed, or patched by the one or more security consultants. The information of the plurality of past vulnerability attacks further comprises a business impact and an effect of each of the plurality of past vulnerability attacks. In one example, information about the plurality of past vulnerability attacks is received by the processing unit in the form of text files which comprise information associated the plurality of vulnerabilities.

In one example, the plurality of engineering data objects comprises one or more textual documents which comprise information associated the plurality of software components 109A-N and the plurality of hardware components 108A-N. Examples of the plurality of engineering data objects comprises one or more textual documents comprising a technical documentation, a sourcecode, a manual, and a specification of the automation system from the industrial plant. Such textual documents comprises information about the plurality of software components and the plurality of hardware components, and one or more functionalities of the plurality of software components and the plurality of hardware components. Such textual documents further comprise information of a manner of connection and communication of the plurality of software components 109A-N and the plurality of hardware components 108A-N with each other. Advantageously, the one or more security consultants is saved from a task of manually reading through the plurality of engineering data objects, thus saving labour and time.

In other words, the plurality of engineering data objects comprise information associated with the plurality of software components 109A-N and the plurality of hardware components 108A-N of the automation system 102. In another example, the plurality of engineering data objects comprises text files, binary files and images scans of physical technical documents. The plurality of engineering data objects comprises information about the plurality of software components 109A-N such as tags, User defined datatypes (UDTs), blocks, libraries, and their interconnections with other sub systems like Human machine interfaces (HMI), OPC UA and other web servers and one or more connections of the plurality of software components 109A-N to the plurality of hardware components 108A-N. The plurality of engineering data objects further comprises information about behavior of the plurality of software components 109A-N and the plurality of hardware components 108A-N at a normal operation of the automation system. The normal operation of the automation system is indicative of a state of operation of the automation system 102 when no vulnerability attacks are potential on the automation system.

The plurality of engineering data objects further comprises details about instruction set used by the plurality of hardware components 108A-N. The plurality of engineering data further comprises behavior of the plurality of hardware components 108A-N such as a maximum, a minimum and an optimum scan cycle used by the plurality of hardware components 108AN to execute the plurality of software components 109A-N. The plurality of engineering data objects comprises information about behavioral modality of trio namely the plurality of software components 109A-N, the plurality of hardware components 108A-N, and the plurality of connections between the plurality of software components 109A-N and the plurality of hardware components 108A-N. Advantageously, the behaviour of the plurality of software components 109A-N and the plurality of software components 109A-N are automatically analyzed by the processing unit 202. Thus, labour and effort required to manually analyze the plurality of engineering data objects is eradicated.

In one example, information about the behavior of the plurality of software components 109A-N and the plurality of hardware components 108A-N comprises information about a plurality of dependencies between a plurality of input parameters and a plurality of output parameters associated with the plurality of hardware components 108A-N and the plurality of software components 109A-N. The plurality of input parameters comprise data received by the plurality of software components 109A-N and the plurality of hardware components 108A-N under the normal operation of the automation systems. The normal operation of the automation system is indicative of a time period in which the automation system 102 is not subject to an potential vulnerability attack. The plurality of output parameters comprise data output by the the plurality of software components 109A-N and the plurality of hardware components 108A-N under the normal operation of the automation systems.

In one example, the plurality of input parameters comprises information about a telemetry data, a user input, a sensor input, and a user configuration received by the plurality of software components 109A-N and the plurality of hardware components 108A-N. The plurality of input parameters further comprises information about a code segment executed by the plurality of software components 109A-N and the plurality of hardware components 108A-N. In another example, the plurality of output parameters comprises information about a processing speed, a memory usage, an output signal, and a list of system errors generated by the plurality of software components 109A-N and the plurality of hardware components 108A-N.

The plurality of dependencies between the plurality of input parameters and the plurality of output parameters is indicative of a ratio between at least one input parameters of the plurality of input parameters to at least one output parameter of the plurality of output parameters. In another example, the plurality of input parameter comprise information associated with a plurality of inputs received by the automation system. Examples of plurality of input parameters include information about a Network Traffic, a User Input, a System Call, a File Operation and an API Call received by the plurality of software components and the plurality of hardware components. In another example, the plurality of output parameters are indicative of a plurality of outputs of the automation system. Examples of plurality of output parameters include information about a Log File, a Network Connection, a Process Information, a File Integrity and an API Call associated with the plurality of software components 109A-N and the plurality of hardware components 108A-N.

When executed by the processing unit 202, the vulnerability intelligence module 112 further causes the processing unit 202 to analyze the plurality of engineering data objects and the information about the plurality of past vulnerability attacks by application of a natural language processing algorithm on the plurality of engineering data objects and the information on the plurality of past vulnerability attacks on the automation system. The natural language processing algorithm is a computational method or technique designed to process and analyze human language. The NLP algorithm is configured to enable computers to understand, interpret, and generate natural language text or speech. The NLP algorithm employ a plurality of techniques from linguistic rules to statistical models and machine learning. Examples of the natural language processing algorithm include but is not limited to a Stanford Parser algorithm, a Spacy algorithm, a CoreNLP algorithm, an OpenNLP algorithm, a Gensim algorithm, a Hugging Face Transformers algorithm, and a Stanford Part-of-Speech Tagger (POS) algorithm.

The vulnerability intelligence module 112 further causes the processing unit 202 to generate a first set of tokens from the plurality of engineering data objects based on the analysis. Each token of the first set of tokens comprises information associated with a specific data object of the plurality of engineering data objects. The processing unit 202 is configured to generate the first set of tokens by application of a tokenization algorithm on the analysed plurality of engineering data objects. The tokenization algorithm is a computational method which splits a text present in the plurality of engineering data objects, into individual words, phrases, or sentences, known as tokens. The tokenization algorithm comprises a plurality of rules and patterns to segment the text effectively. Examples of the tokenization algorithm comprises a Rule-based tokenization algorithm, a white space tokenization algorithm, a Regular expression tokenization algorithm, a Statistical tokenization algorithm, a Maximum entropy tokenization algorithms, and a Neural network-based tokenization algorithms.

The vulnerability intelligence module 112 further causes the processing unit 202 to apply a dependency parsing algorithm on the first set of tokens to analyze a syntactic structure of interdependencies between one or more tokens of the first set of tokens. In another example, the dependency parsing algorithm is applied on the text comprised within the plurality of engineering data objects. The dependency parsing algorithm is configured to identify a plurality of grammatical relationships between two or more tokens of the first set of tokens and the grammatical relationships are represented by the dependency parsing algorithm as a dependency tree. Thus, the processing unit is configured to generate a plurality of dependency trees.

Each dependency tree of the plurality of dependency trees is representative of the plurality of grammatical relationships between two or more tokens of the first set of tokens. It is noted that each token of the first set of tokens is indicative of information about the plurality of software components and the plurality of hardware components. Thus, the plurality of grammatical relationships between the first set of tokens is indicative of the plurality of dependencies between two or more components in the plurality of software components and the plurality of hardware components.

Since the plurality of engineering data objects comprise information about the plurality of input parameters and the plurality of output parameters, the plurality of grammatical relationships between the first set of tokens is further indicative of the plurality of dependencies between the plurality of input parameters and the plurality of output parameters.

The vulnerability intelligence module 112 further causes the processing unit 202 to extract information associated with the plurality of software components 109A-N and the plurality of hardware components 108A-N of the automation system 102 from the first set of tokens. In one example, the processing unit 202 is configured to filter the first set of tokens with one or more named entity recognition (NER) algorithms to identify mentions of the plurality of software components 109A-N and the plurality of hardware components 108A-N in the first set of tokens.

The vulnerability intelligence module 112 further causes the processing unit 202 to analyze a plurality of dependencies in the plurality of dependency trees and the identified mentions of the plurality of software components 109A-N and the plurality of hardware components 108A-N by application of a semantic role labelling algorithm on the first set of tokens. The semantic role labelling algorithm is configured to assign semantic roles to the identified mentions of the plurality of hardware components 108A-N and the plurality of software components 109A-N based on the plurality of dependency trees. The semantic roles of each component of the plurality of hardware components 108A-N and the plurality of software components 109A-N is indicative of a relationship of each component with other components of the plurality of hardware components 108A-N and the plurality of software components 109AN. Examples of the semantic role labelling algorithms include, but is not limited to AllenNLP Algorithm or PropBank project algorithm.

The vulnerability intelligence module 112 further causes the processing unit 202 to analyze the plurality of grammatic relationships and the plurality of assigned semantic roles to determine a plurality of interconnections between tokens in the first set of tokens. The plurality of interconnections between tokens among the first set of tokens is indicative of a plurality of interdependencies between behaviour of the plurality of software components and the plurality of hardware components. For example, the plurality of interdependencies are indicative of the plurality of dependencies between the plurality of input parameters and the plurality of output parameters associated with the plurality of software components 109A-N and the plurality of hardware components 108A-N.

For example, a dependency between an input parameter and an output parameter of at least one software component or hardware component in at least one dependency tree of the plurality of dependency trees, is indicative of a interdependency between the software component and the hardware component. In other words, the vulnerability intelligence module 112 further causes the processing unit 202 to generate a first map between the generated plurality of tokens based on an analysis of the generated first set of tokens. The first map comprises the generated plurality of interconnections between two or more tokens of the first set of tokens. In one example, the first map is stored as a plurality of knowledge graph triples.

The vulnerability intelligence module 112 further causes the processing unit 202 to generate a first knowledge graph based on the analysis of the plurality of dependency trees. The generated first knowledge graph comprises information the determined plurality of interconnections between two or more tokens of the first set of tokens comprising information about the plurality of hardware components 108A-N and the plurality of software components 109A-N. In other words, the generated first knowledge graph comprises information about the plurality of interdependencies between the plurality of hardware components 108A-N and the plurality of software components 109A-N.

In one example, the generated first knowledge graph comprises a plurality of nodes and a plurality of edges. Each node of the plurality of nodes comprises information associated with a specific hardware component or a specific software component of the plurality of software components and the plurality of hardware components. In one example, a plurality of graph database technologies or graph representation formats like such as SPARQL and Resource Description Framework is used to store data in and manage the generated first knowledge graph. The generated first knowledge graph is an engineering behaviour ontological schema. In other words, the vulnerability intelligence module 112 further causes the processing unit 202 to generate the engineering behavior ontological schema based on an analysis of the plurality of engineering data objects and the information associated with the plurality of past vulnerability attacks.

In one example, the plurality of software components 109A-N comprises a plurality of code segments in a PLC code and the information about the plurality of hardware components 108A-N comprises information associated with a performance of the plurality of hardware components 108A-N when each hardware component executes the plurality of code segments. In such a case, the engineering behaviour ontological schema is a knowledge graph representation comprising information associated with a plurality of interconnections and dependencies between a plurality of code segments in the PLC code, and a performance of the plurality of hardware components 108A-N associated with the plurality of code segments. In another example, the plurality of engineering data objects comprises information associated with the plurality of input parameters and the plurality of output parameters associated with each of the plurality of software components 109A-N and the plurality of hardware components 108A-N of the automation system 102. In such a case, the engineering behaviour ontological schema comprises information associated with the plurality of dependencies between the plurality of input parameters and the plurality of output parameters, when during a state of the automation system 102 at which the automation system 102 is not subject to an potential vulnerability attack. Advantageously, the processing unit 202 is configured to automatically generate the engineering behaviour ontological schema which comprises information about a behaviour of the plurality of hardware components 108A-N and the plurality of software components 109A-N under the normal operation of the automation system 102.

The vulnerability intelligence module 112 further causes the processing unit 202 to analyze the plurality of engineering data objects and the information about the plurality of past vulnerability attacks by application of the NLP algorithm on the information associated with the plurality of past vulnerability attacks. The vulnerability intelligence module 112 further causes the processing unit 202 to generate a second set of tokens from the information associated with the plurality of past vulnerability attacks based on analysis of information associated with the plurality of past vulnerability attacks. Each token of the second set of tokens comprises information associated with a specific past vulnerability attack of the plurality of past vulnerability attacks. The processing unit 202 is further configured to generate the second set of tokens by application of the tokenization algorithm on the analysed plurality of engineering data objects and the information associated with the plurality of past vulnerability attacks.

The vulnerability intelligence module 112 further causes the processing unit 202 to apply a dependency parsing algorithm on the second set of tokens to analyze a syntactic structure of one or more tokens of the second set of tokens. The dependency parsing algorithm is configured to identify a plurality of grammatical relationships between two of more tokens of the second set of tokens and the grammatical relationships are represented by the dependency parsing algorithm as a dependency tree. Thus, the processing unit is further configured to generate a plurality of dependency trees. Each dependency tree of the plurality of dependency trees is representative of the plurality of grammatical relationships between two or more tokens of the second set of tokens. It is noted that each token of the second set of tokens is indicative of information about one or more past vulnerability attacks of the plurality of vulnerability attacks.

The vulnerability intelligence module 112 further causes the processing unit 202 to extract information associated with the plurality of past vulnerability attacks. In one example, the processing unit is further configured to filter the second set of tokens with one or more named entity recognition (NER) algorithms to identify mentions of each vulnerability attack of the plurality of past vulnerability attacks. In one example, the identified mentions of each vulnerability attack comprises the vulnerability ID of the vulnerability attack.

The vulnerability intelligence module 112 further causes the processing unit 202 to analyze a plurality of dependencies in the plurality of dependency trees and the identified mentions of the plurality of past vulnerability attacks by application of a semantic role labelling algorithm. The semantic role labelling algorithm is configured to assign semantic roles to the identified mentions of the plurality of past vulnerability attacks based on the plurality of dependency trees. The semantic roles of each component of the plurality of past vulnerability attacks is indicative of an effect of plurality of past vulnerability attacks on the plurality of hardware components and the plurality of software components.

The vulnerability intelligence module 112 further causes the processing unit 202 to analyze the plurality of grammatic relationships and the plurality of assigned semantic roles to determine a plurality of interconnections between two or more tokens in the first set of tokens and the second set of tokens. The plurality of interconnections between one or more tokens among the second set of tokens is indicative of a plurality of interdependencies between behaviour of the plurality of software components and the plurality of hardware components and the plurality of past vulnerability attacks. For example, the plurality of interdependencies are indicative of the plurality of interdependencies between the plurality of past vulnerability attacks with a behaviour of the plurality of software components and the plurality of hardware components. For example, the plurality of interdependencies are indicative of variations in the plurality of input parameters and the plurality of output parameters in the event of at least one vulnerability attack of the plurality of past vulnerability attacks.

In another example, the plurality of interdependencies are indicative of a ratio between the plurality of input parameters and the plurality of output parameters in the event of at least one vulnerability attack of the plurality of past vulnerability attacks. In yet another example, the plurality of interdependencies comprises information about a plurality of anomalies in the plurality of input parameters and the plurality of output parameters during each of the plurality of past vulnerability attacks.

The vulnerability intelligence module 112 further causes the processing unit 202 to generate a second knowledge graph to represent the determined plurality of interconnections between two or more tokens of the first set of tokens and the second set of tokens. It is noted that the second set of tokens comprises information about the plurality of past vulnerability attacks. In other words, the generated second knowledge graph comprises information about the plurality of interdependencies between the plurality of hardware components 108A-N and the plurality of software components 109A-N during each of the plurality of past vulnerability attacks.

Furthermore, the generated second knowledge graph comprises information associated with the plurality of anomalies in values of the plurality of input parameters and the plurality of output parameters of the automation system 102. The second knowledge graph further comprises information associated with a mapping between the plurality of anomalies, the plurality of input parameters, and the plurality of output parameters. In other words, the method comprises generating, by the processing unit 202, a second map between the generated second set of tokens based on an analysis of the generated second set of tokens.

In one example, the second generated knowledge graph comprises a plurality of nodes and a plurality of edges. Each node of the plurality of nodes comprises information associated with a specific vulnerability attack of the plurality of vulnerability attacks or a specific component of the plurality of software components 109A-N and the plurality of hardware components 108A-N. In one example, a plurality of graph database technologies or graph representation formats like such as SPARQL and Resource Description Framework is used to store data in and manage the generated knowledge graph. The generated second knowledge graph is a vulnerability ontological schema. In other words, the vulnerability intelligence module 112 further causes the processing unit 202 to generate the vulnerability ontological schema based an analysis of the plurality of engineering data objects and information associated with the plurality of past vulnerability attacks.

In one example, the vulnerability ontological schema comprises information associated with the plurality of anomalies associated with the plurality of past vulnerability attacks. Examples of the plurality of anomalies associated each of the plurality of past vulnerability attacks includes one or more anomalies in the plurality of input parameters and the plurality of output parameters of the automation system 102 during each vulnerability attack of the plurality of past vulnerability attacks. An anomaly is indicative of a variation of the plurality of input parameters and the plurality of output parameters from one or more parameter values indicated by the engineering behaviour ontological schema. The vulnerability ontological schema further comprises information about a plurality of dependencies between the plurality of anomalies and the plurality of past vulnerability attacks. Thus, each anomaly of the plurality of anomalies is mapped by the vulnerability ontological schema to a specific past vulnerability attacks of the plurality of past vulnerability attacks.

The vulnerability intelligence module 112 further causes the processing unit 202 to analyze the second set of tokens, by the processing unit 202, to extract information associated with an effect of each vulnerability attack of the plurality of past vulnerability attacks on the automation system 102. The vulnerability intelligence module 112 further causes the processing unit 202 to generate a third knowledge graph comprising information associated with an effect of each vulnerability attack, of the plurality of past vulnerability attacks, on the plurality of software components 109A-N and the plurality of hardware components 108A-N. In one example, the third knowledge graph comprises information associated effect of each of the plurality of past vulnerability attacks on the plurality of hardware components 108A-N and the plurality of software components 109A-N.

In one example, the information associated with effect of each of the plurality of past vulnerability attacks comprises information associated with at least one of a stoppage, a slowness, a crash, a malfunction, a data theft, and a code replication, a list of inputs injected by the vulnerability into the automation system 102, a change in workflow of the automation system 102 caused by the vulnerability attack, a change in process of the automation system 102 by the vulnerability attack, a change in processing power of the automation system 102 which has occurred on the automation system 102 as a result of each of the plurality of past vulnerability attacks. It is noted that, the effect of each of the plurality of past vulnerability attacks is manually recorded by the security consultant during the one or more vulnerability sniffing operations conducted by the security consultant on the automation system 102.

In one example, the generated third knowledge graph comprises a plurality of nodes and a plurality of edges. Each node of the plurality of nodes comprises information associated with an effect of a specific vulnerability attack of the plurality of vulnerability attacks on a specific component of the plurality of software components and the plurality of hardware components. In one example, the generated third knowledge graph comprises information associated each of the plurality of past vulnerability attacks. The effect of the plurality of past vulnerability attacks include, but is not limited to a list of inputs injected by the vulnerability into the automation system 102, a change in workflow of the automation system 102 caused by the vulnerability attack, a change in process of the automation system 102 by the vulnerability attack, a change in processing power of the automation system 102 caused by the vulnerability attack. Advantageously, the processing unit 202 is configured to automatically generate the attack effect ontological schema which comprises information about an effect of each of the plurality of past vulnerability attacks.

The generated third knowledge graph is an attack effect ontological schema. In other words, the vulnerability intelligence module 112 further causes the processing unit 202 to generate the attack effect ontological schema. In one example, the attack effect ontological schema comprises information associated with an effect of each of the plurality of past vulnerability attacks on the plurality of software components and the plurality of hardware components. For example, information stored in the attack effect ontological schema comprises but is not limited to a list of inputs injected by the vulnerability into the automation system, a change in workflow of the automation system caused by the vulnerability attack, a change in process of the automation system by the vulnerability attack, a change in processing power of the automation system caused by the vulnerability attack. Furthermore, the attack effect ontological schema comprises information associated with a plurality of interdependencies between the effect of each vulnerability attack of the plurality of past vulnerability attacks on the plurality of software components and the plurality of hardware components. In other words, the attack effect ontological schema comprises information associated with the effect of each of the plurality of past vulnerability attacks on the plurality of hardware components 108A-N and the plurality of software components 109A-N.

The vulnerability intelligence module 112 further causes the processing unit 202 to receive a set of input parameters and a first set of output parameters from the automation system. The set of input parameters comprises a plurality of inputs received by the plurality of software components 109A-N and the plurality of hardware components 108A-N. Examples of the set of input parameters include, but is not limited to a sensor input, a user input, a workflow detail, a plurality of scan cycle parameters associated with the plurality of software components 109A-N and the plurality of hardware components 108A-N. The first set of output parameters comprises information about memory usage of the plurality of software components 109A-N and the plurality of hardware components 108A-N. The first set of output parameters further comprises a data output, a processing power consumption data, and information about a processing speed of the plurality of software components 109A-N and the plurality of hardware components 108A-N.

The vulnerability intelligence module 112 further causes the processing unit 202 to apply the engineering behaviour ontological schema on the received set of input parameters and the first set of output parameters. In one example, to apply the engineering behavior ontological schema on the received set of input parameters and the received first set of output parameters, the processing unit 202 is configured to query the engineering behavior ontological schema based on the received set of input parameters. It is noted that the engineering behaviour ontological schema comprises information associated with the plurality of dependencies between the plurality of input parameters and the plurality of output parameters of the automation system 102 under a normal operation of the automation system 102. The normal operation of the automation system is a mode of operation of the automation system 102 in which the automation system 102 is not subject to an potential vulnerability attack by a malicious entity such as a hacker. Thus, by querying the engineering behaviour ontological schema, the processing unit 202 is configured to generate a second set of output parameters based on the set of input parameters.

The second set of output parameters are indicative of one or more output parameters which are generated by the automation system 102, when the automation system processes the set of input parameters during the normal operation of the automation system 102. Advantageously, the processing unit 202 is enabled to compare the first set of output parameters with the second set of output parameters to detect one or more anomalies in the first set of output parameters and thereby detect an potential vulnerability attack on the automation system 102.

The processing unit 202 is further configured to generate the second set of output parameters by querying the engineering behavior ontological schema using the received set of input parameters. The vulnerability intelligence module 112 further causes the processing unit 202 to compare the first set of output parameters with the second set of output parameters. The processing unit 202 is configured to compare the first set of output parameters and the second set of output parameters by application of a comparison algorithm on the first set of output parameters and the second set of output parameters. Examples of the comparison algorithm comprises, but is not limited to mean absolute error based algorithm, Root Mean Squared Error based algorithm, and a cosine similarity algorithm.

The vulnerability intelligence module 112 further causes the processing unit 202 to determine at least one anomaly in the first set of output parameters based on the comparison. The at least one anomaly is indicative of a difference between the first set of output parameters and the second set of output parameters. In other words, the determined at least one anomaly is indicative of a deviation of a behaviour of the automation system 102 from a behaviour expressed in the engineering behaviour ontological schema. Thus, the detected at least one anomaly is an indication of an potential vulnerability attack on the automation system 102.

The vulnerability intelligence module 112 further causes the processing unit 202 to compare the determined at least one anomaly with the plurality of anomalies depicted in the vulnerability ontological schema. It is noted that each anomaly of the plurality of anomalies is associated with a specific vulnerability attack of the plurality of past vulnerability attacks. Furthermore, each node of the plurality of nodes of the vulnerability ontology schema is representative of a specific vulnerability attack of the plurality of past vulnerability attacks. In one example, the determined at least one anomaly is compared with the plurality of anomalies by application of a similarity algorithm on the determined at least one anomaly and the plurality of anomalies. Examples of the similarity algorithm includes a cosine similarity algorithm and a Jaccard similarity algorithm. The similarity algorithm is configured to determine a similarity of the at least one anomaly to a set of anomalies stored in the vulnerability ontology schema. In a case where the at least one anomaly is similar to the set of anomalies, the similarity algorithm is configured to match the at least one anomaly to the set of anomalies.

The vulnerability intelligence module 112 further causes the processing unit 202 to match the determined at least one anomaly with at least one node of the plurality of nodes of the vulnerability ontology schema. The at least one node of the plurality of nodes comprises information associated with the set of anomalies which are similar to the determined at least one anomaly. Furthermore, the at least one node of the plurality of nodes comprises information associated with a set of past vulnerability attacks which caused the set of anomalies in the past. The vulnerability intelligence module 112 further causes the processing unit 202 to predict an potential vulnerability attack on the automation system based on the detected at least one node of the plurality of nodes. In other words, the method further comprises predicting an potential vulnerability attack on the automation system based on the detected at least one anomaly in the automation system.

The vulnerability intelligence module 112 further causes the processing unit 202 to compare the detected at least one node of the vulnerability ontological schema with each node of the attack effect ontological schema based on an analysis of the detected potential vulnerability attack and the vulnerability ontological schema. In one example, the detected at least one node of the vulnerability ontological schema is compared with each node of the attack effect ontological schema by application of a similarity algorithm on the detected at least one node of the vulnerability ontological schema and each node of the attack effect ontological schema. Examples of the similarity algorithm includes a cosine similarity algorithm and a Jaccard similarity algorithm.

The vulnerability intelligence module 112 further causes the processing unit 202 to detect at least one node of the attack effect ontology schema based on the comparison. The detected at least one node of the attack effect ontology schema is indicative of information associated with a list of effects caused by the determined set of past vulnerability attacks on the automation system 102 in the past. In other words, the processing unit 202 is configured to detect a list of effects caused by the determined set of past vulnerability attacks on the automation system 102. Since the detected potential vulnerability attack is similar to the determined set of past vulnerability attacks, the list of effect caused by the determined set of past vulnerability attacks is indicative of a set of possible effects of the predicted potential vulnerability attack. The vulnerability intelligence module 112 further causes the processing unit 202 to determine the set of possible effects of the potential vulnerability attack based on an analysis of the at least one node of the attack effect ontology schema. In other words, the vulnerability intelligence module 112 further causes the processing unit 202 to predicting the potential vulnerability attack and a set of possible effects of the predicted potential vulnerability attack based on the determined at least one anomaly.

In one example, the information associated with the set of possible effects caused by the potential vulnerability attack comprises information associated with at least one of a stoppage, a slowness, a crash, a malfunction, a data theft, and a code replication, a list of inputs injected by the vulnerability into the automation system 102, a change in workflow of the automation system 102 which may be caused by the potential vulnerability attack, a change in process of the automation system by the potential vulnerability attack, a change in processing power of the automation system which has occurred on the automation system as a result of the potential vulnerability attack. Furthermore, the information associated with the set of possible effects of the potential vulnerability attack further comprises a list of components of the plurality of software components 109A-N and the plurality of hardware components 108A-N which may be affected by the potential vulnerability attack. Advantageously, the processing unit is configured to generate a list of possible effects of the potential vulnerability attack on the automation system 102. Thus, a security consultant is enabled to take appropriate steps to neutralize the potential vulnerability attack.

The vulnerability intelligence module 112 further causes the processing unit 202 to initiate a vulnerability sniffing operation on the automation system 102 based on the prediction of the potential vulnerability attack and the determined set of possible effects of the potential vulnerability attack. The vulnerability sniffing operation refers to a process of actively scanning the automation system 102 to identify vulnerabilities or weaknesses that could potentially be exploited by malicious actors. Examples of the vulnerability sniffing operation includes, but is not limited to Port Scanning based vulnerability sniffing operation, Vulnerability Scanners based vulnerability sniffing operation, Network Mapping based vulnerability sniffing operation, and Web Application Scanning based vulnerability sniffing operation. The vulnerability sniffing operation is executed to validate a presence of the potential vulnerability attack on the automation system 102.

The vulnerability intelligence module 112 further causes the processing unit 202 to validate a prediction of the detected vulnerability attack based on a result of the vulnerability sniffing operation. In one example, the result of the vulnerability sniffing operation indicates a presence of a vulnerability in the automation system 102. In such a case, the predicted potential vulnerability attack is validated by the processing unit 202. Advantageously, the processing unit initiates the vulnerability sniffing operation based on the detection of the potential vulnerability attack on the automation system 102.

The vulnerability intelligence module 112 further causes the processing unit 202 to generate a user alert based on the validation of the detected potential vulnerability attack on the automation system 102. In one example, the user alert is at least one of a voice based, a image based or a text based user alert. The vulnerability intelligence module 112 further causes the processing unit 202 to output the generated user alert comprising information about the predicted potential vulnerability attack and the detected set of possible effects of the detected potential vulnerability attack to a user. In one example, the generated user alert is output by the processing unit 202 via an output device such as a computer monitor.

In one example, the generated user alert comprises information associated with the detected potential vulnerability attack. For example, the information associated with the detected potential vulnerability attack comprises information associated with a specific vulnerability of the plurality of vulnerabilities. The information associated with the specific vulnerability includes the vulnerability ID, the Vulnerability Description, the list of Components affected by the vulnerability, the Vulnerability Type, the Severity of the vulnerability, the Exploitability of the vulnerability, the Mitigation Measure deployed in the past to nullify the vulnerability, and the Date at which the vulnerability was exploited by a hacker to conduct at least one vulnerability attack of the plurality of past vulnerability attacks.

In one example, the generated user alert comprises information associated with the predicted potential vulnerability attack. For example, the information associated with the predicted potential vulnerability attack comprises information associated with a specific vulnerability of the plurality of vulnerabilities. The information associated with the specific vulnerability includes the vulnerability ID, the Vulnerability Description, the list of Components affected by the vulnerability, the Vulnerability Type, the Severity of the vulnerability, the Exploitability of the vulnerability, the Mitigation Measure deployed in the past to nullify the vulnerability, and the Date at which the vulnerability was exploited by a hacker to conduct at least one vulberability attack of the plurality of past vulnerability attacks.

Referring back to FIG. 2, the storage unit 206 may be a non-transitory storage medium configured for storing a database (such as database 118) which comprises server version of the plurality of programming blocks associated with the set of industrial domains.

The communication interface 208 is configured for establishing communication sessions between the one or more client devices 120A-N and the engineering system 102. The communication interface 208 allows the one or more engineering applications running on the client devices 120A-N to import/export engineering project files into the engineering system 102.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a graphical user interface which visualizes the behavior model associated with the modified engineering programs and also displays the status information associated with each set of actions performed on the graphical user interface. The set of actions may include execution of predefined tests, download, compile and deploy of graphical programs. The bus 214 acts as interconnect between the processor 202, the memory 204, and the input-output unit 210.

The network interface 212 may be configured to handle network connectivity, bandwidth and network traffic between the engineering system 102, client devices 120A-N and the technical installation.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described. The remainder of the construction and operation of the engineering system 102 may conform to any of the various current implementation and practices known in the art.

FIG 3 is a block diagram of a vulnerability intelligence module 112, such as those shown in FIG 2, in which an embodiment of the present invention can be implemented. In FIG 3, the remodeller module 112 comprises a request handler module 302, an ontological schema generation module 304, an analysis module 306, a natural language processing module 308, an engineering data object database 310, a validation module 312 and a deployment module 314. FIG. 3 is explained in conjunction with FIG. 1 and FIG. 2.

The request handler module 302 is configured for receiving a request from a user to predict a vulnerability attack on the automation system 102. For example, the request is received from one of the one or more users external to the industrial environment 100 via the network 104. In alternative embodiment, the request is received from the one or the one or more client devices 120A-N via the network 104.

The ontological schema generation module 304 is configured for generating the vulnerability ontological schema, the engineering behaviour ontological schema, the vulnerability ontological schema, and the attack effect ontolological schema.

The analysis module 306 is configured for analyzing the plurality of engineering data objects. The analysis module 306 is further configured to analyze the information associated with the plurality of past vulnerability attacks.

The natural language processing module 308 is configured for apply the natural language processing algorithm on the plurality of engineering data objects and the information associated with the plurality of past vulnerability attacks.

The engineering data object database 310 is configured to store the plurality of engineering data objects associated with the automation system 102.

The validation module 312 is configured to validate the prediction of the potential vulnerability attack on the automation system 102. The validation module 312 is further configured to initiate the vulnerability sniffing operation.

The deployment module 314 is configured to execute one or more configuration changes on the automation system 102 to neutralize the predicted potential vulnerability attack on the automation system 102.

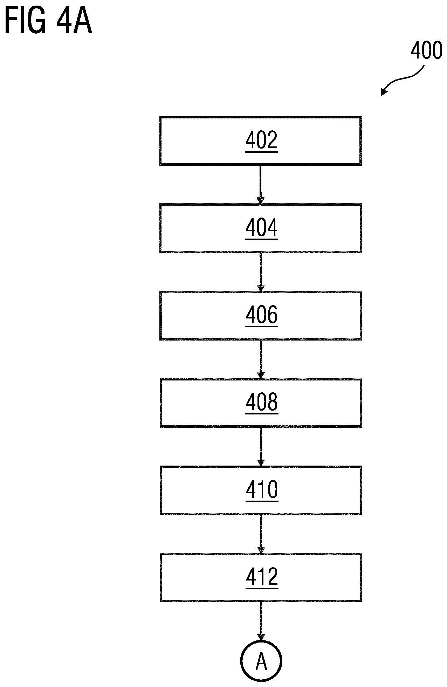

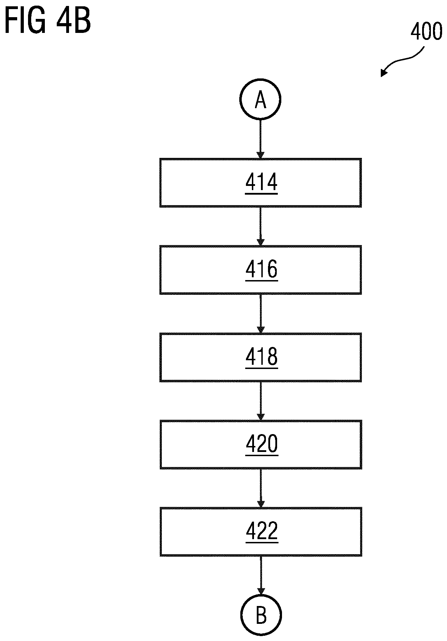

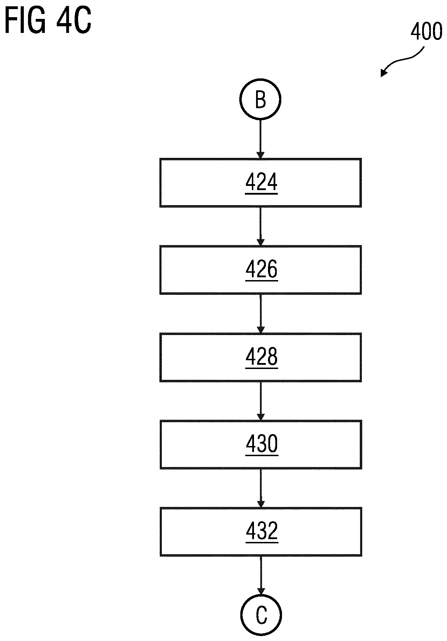

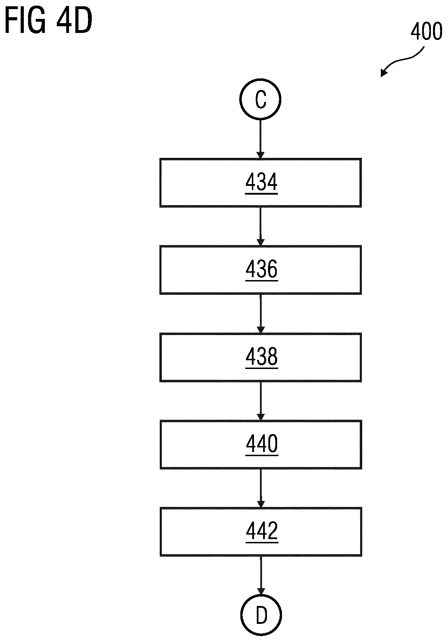

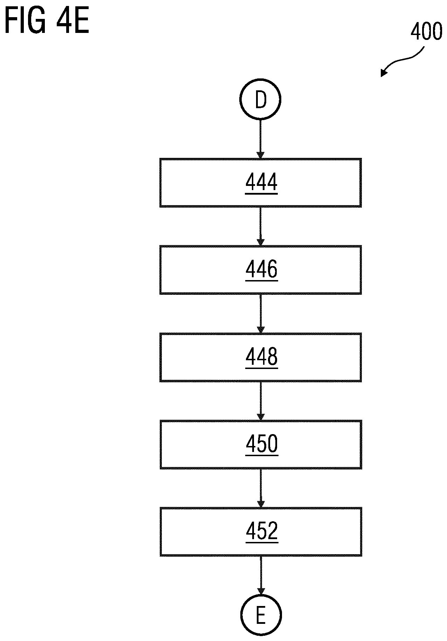

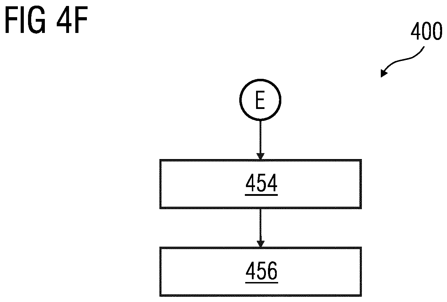

FIG 4A-F is a process flowchart illustrating an exemplary method 400 of predicting a vulnerability attack on an automation system, according to an embodiment of the present invention. FIG 4A-E is described in conjunction with FIG 1, 2, and 3.

At step 402, a plurality of engineering data objects associated with the automation system 102 are received by the processing unit 202. Furthermore, at 402, information associated with a plurality of past vulnerability attacks on the automation system 106 are received by the processing unit 202.

At step 404, the plurality of engineering data objects and the information about the plurality of past vulnerability attacks are analyzed by the processing unit 202 by application of a natural language processing algorithm on the plurality of engineering data objects and the information on the plurality of past vulnerability attacks on the automation system 102.

At step 406, a first set of tokens are generated by the processing unit 202, from the plurality of engineering data objects. The first set of tokens are generated based on the analysis.

At step 408, a dependency parsing algorithm is applied by the processing unit 202 on the first set of tokens to analyze a syntactic structure of interdependencies between one or more tokens of the first set of tokens.

At step 410, information associated with the plurality of software components 109A-N and the plurality of hardware components 108A-N of the automation system 102 is extracted by the processing unit 202 from the first set of tokens. In one example, the processing unit 202 is configured to filter the first set of tokens with one or more named entity recognition (NER) algorithms to identify mentions of the plurality of software components 109A-N and the plurality of hardware components 108A-N in the first set of tokens.

At step 412, a plurality of dependencies are analyzed by the processing unit 202 in the plurality of dependency trees and the identified mentions of the plurality of software components 109A-N and the plurality of hardware components 108A-N by application of a semantic role labelling algorithm on the first set of tokens.

At step 414, the plurality of grammatic relationships and the plurality of assigned semantic roles are analyzed by the processing unit 202 to determine a plurality of interconnections between tokens in the first set of tokens. The plurality of interconnections between tokens among the first set of tokens is indicative of a plurality of interdependencies between behaviour of the plurality of software components and the plurality of hardware components.

At step 416, a first map between the generated plurality of tokens is generated by the processing unit 202, based on an analysis of the generated first set of tokens. The first map comprises the generated plurality of interconnections between two or more tokens of the first set of tokens. In one example, the first map is stored as a plurality of knowledge graph triples.

At step 418, a first knowledge graph is generated by the processing unit 202 based on the generated first map. The first knowledge graph represents the determined plurality of interconnections between two or more tokens of the first set of tokens comprising information about the plurality of hardware components 108A-N and the plurality of software components 109A-N. In other words, the vulnerability intelligence module 112 further causes the processing unit 202 to generate the engineering behavior ontological schema based on an analysis of the plurality of engineering data objects and the information associated with the plurality of past vulnerability attacks.

At step 420, the plurality of engineering data objects and the information about the plurality of past vulnerability attacks are analyzed by the processing unit 202 by application of the NLP algorithm on the information associated with the plurality of past vulnerability attacks.

At step 422, a second set of tokens are generated by the processing unit 202 from the information associated with the plurality of past vulnerability attacks based on analysis of information associated with the plurality of past vulnerability attacks. Each token of the second set of tokens comprises information associated with a specific past vulnerability attack of the plurality of past vulnerability attacks. The processing unit 202 is further configured to generate the second set of tokens by application of the tokenization algorithm on the analysed plurality of engineering data objects and the information associated with the plurality of past vulnerability attacks.

At step 424, a dependency parsing algorithm is applied by the processing unit 202 on the second set of tokens to analyze a syntactic structure of one or more tokens of the second set of tokens. The dependency parsing algorithm is configured to identify a plurality of grammatical relationships between two of more tokens of the second set of tokens and the grammatical relationships are represented by the dependency parsing algorithm as a dependency tree. Thus, the processing unit is further configured to generate a plurality of dependency trees. Each dependency tree of the plurality of dependency trees is representative of the plurality of grammatical relationships between two or more tokens of the second set of tokens. It is noted that each token of the second set of tokens is indicative of information about one or more past vulnerability attacks of the plurality of vulnerability attacks.

At step 426, the information associated with the plurality of past vulnerability attacks is extracted by the processing unit 202. In one example, the processing unit is further configured to filter the second set of tokens with one or more named entity recognition (NER) algorithms to identify mentions of each vulnerability attack of the plurality of past vulnerability attacks. In one example, the identified mentions of each vulnerability attack comprises the vulnerability ID of the vulnerability attack.

At step 428, a plurality of dependencies in the plurality of dependency trees and the identified mentions of the plurality of past vulnerability attacks are generated by the processing unit 202 by application of a semantic role labelling algorithm. The semantic role labelling algorithm is configured to assign semantic roles to the identified mentions of the plurality of past vulnerability attacks based on the plurality of dependency trees. The semantic roles of each component of the plurality of past vulnerability attacks is indicative of an effect of the plurality of past vulnerability attacks on the plurality of hardware components and the plurality of software components.

At step 430, the plurality of grammatic relationships and the plurality of assigned semantic roles are analyzed by the processing unit 202 to determine a plurality of interconnections between two or more tokens in the first set of tokens and the second set of tokens.

At step 432, a second knowledge graph is generated by the processing unit 202 to represent the determined plurality of interconnections between two or more tokens of the first set of tokens and the second set of tokens. It is noted that the second set of tokens comprises information about the plurality of past vulnerability attacks. In other words, the generated second knowledge graph comprises information about the plurality of interdependencies between the plurality of hardware components 108A-N and the plurality of software components 109A-N during each of the plurality of past vulnerability attacks.

At step 434, the second set of tokens are analysed by the processing unit 202, to extract information associated with an effect of each vulnerability attack of the plurality of past vulnerability attacks on the automation system 102. The vulnerability intelligence module 112 further causes the processing unit 202 to generate a third knowledge graph comprising information associated with an effect of each vulnerability attack, of the plurality of past vulnerability attacks, on the plurality of software components 109A-N and the plurality of hardware components 108A-N. In one example, the third knowledge graph comprises information associated effect of each of the plurality of past vulnerability attacks on the plurality of hardware components 108A-N and the plurality of software components 109A-N.

The generated third knowledge graph is an attack effect ontological schema. In other words, the vulnerability intelligence module 112 further causes the processing unit 202 to generate the attack effect ontological schema. In one example, the attack effect ontological schema comprises information associated with an effect of each of the plurality of past vulnerability attacks on the plurality of software components and the plurality of hardware components. For example, information stored in the attack effect ontological schema comprises but is not limited to a list of inputs injected by the vulnerability into the automation system, a change in workflow of the automation system caused by the vulnerability attack, a change in process of the automation system by the vulnerability attack, a change in processing power of the automation system caused by the vulnerability attack. Furthermore, the attack effect ontological schema comprises information associated with a plurality of interdependencies between the effect of each vulnerability attack of the plurality of past vulnerability attacks on the plurality of software components and the plurality of hardware components. In other words, the attack effect ontological schema comprises information associated with the effect of each of the plurality of past vulnerability attacks on the plurality of hardware components 108A-N and the plurality of software components 109A-N.

At step 436, a set of input parameters and a first set of output parameters are received by the processing unit 202 from the automation system 102. The first set of input parameters comprises a plurality of inputs received by the plurality of software components 109A-N and the plurality of hardware components 108A-N. Examples of the set of input parameters include, but is not limited to a sensor input, a user input, a workflow detail, a plurality of scan cycle parameters associated with the plurality of software components 109A-N and the plurality of hardware components 108A-N. The first set of output parameters comprises information about memory usage of the plurality of software components 109A-N and the plurality of hardware components 108A-N. The first set of output parameters further comprises a data output, a processing power consumption data, and information about a processing speed of the plurality of software components 109A-N and the plurality of hardware components 108A-N.

At step 438, the engineering behaviour ontological schema is applied by the processing unit 202 on the received set of input parameters and the first set of output parameters. In one example, to apply the engineering behavior ontological schema on the received set of input parameters and the received first set of output parameters, the processing unit 202 is configured to query the engineering behavior ontological schema based on the received set of input parameters. It is noted that the engineering behaviour ontological schema comprises information associated with the plurality of dependencies between the plurality of input parameters and the plurality of output parameters of the automation system 102 under a normal operation of the automation system 102.

At step 440, at least one anomaly is determined by the processing unit 202 in the first set of output parameters based on the comparison. The at least one anomaly is indicative of a difference between the first set of output parameters and the second set of output parameters. In other words, the determined at least one anomaly is indicative of a deviation of a behaviour of the automation system 102 from a behaviour expressed in the engineering behaviour ontological schema. Thus, the detected at least one anomaly is an indication of an potential vulnerability attack on the automation system 102.

At step 442 the determined at least one anomaly is compared with the plurality of anomalies depicted in the vulnerability ontological schema. At step 444, the determined at least one anomaly is matched by the processing unit 202 with at least one node of the plurality of nodes of the vulnerability ontology schema. At step 446, an potential vulnerability attack on the automation system 102 is predicted by the processing unit 202 based on the detected at least one node of the plurality of nodes. In other words, the method 400 further comprises predicting an potential vulnerability attack on the automation system based on the detected at least one anomaly in the automation system 102.

At step 448, the detected at least one node of the vulnerability ontological schema is compared by the processing unit 202 with each node of the attack effect ontological schema based on an analysis of the detected potential vulnerability attack and the vulnerability ontological schema. In one example, the detected at least one node of the vulnerability ontological schema is compared with each node of the attack effect ontological schema by application of a similarity algorithm on the detected at least one node of the vulnerability ontological schema and each node of the attack effect ontological schema. Examples of the similarity algorithm includes a cosine similarity algorithm and a Jaccard similarity algorithm.

At step 450, at least one node of the attack effect ontology schema is detected by the processing unit 202 based on the comparison. The detected at least one node of the attack effect ontology schema is indicative of information associated with a list of effects caused by the determined set of past vulnerability attacks on the automation system 102 in the past. In other words, the processing unit 202 is configured to detect a list of effects caused by the determined set of past vulnerability attacks on the automation system 102. Since the detected potential vulnerability attack is similar to the determined set of past vulnerability attacks, the list of effect caused by the determined set of past vulnerability attacks is indicative of a set of possible effects of the predicted potential vulnerability attack. The vulnerability intelligence module 112 further causes the processing unit 202 to determine the set of possible effects of the potential vulnerability attack based on an analysis of the at least one node of the attack effect ontology schema. In other words, the vulnerability intelligence module 112 further causes the processing unit 202 to predict the potential vulnerability attack and a set of possible effects of the predicted potential vulnerability attack based on the determined at least one anomaly.

In one example, the information associated with the set of possible effects caused by the potential vulnerability attack comprises information associated with at least one of a stoppage, a slowness, a crash, a malfunction, a data theft, and a code replication, a list of inputs injected by the vulnerability into the automation system 102, a change in workflow of the automation system 102 which may be caused by the potential vulnerability attack, a change in process of the automation system by the potential vulnerability attack, a change in processing power of the automation system which has occurred on the automation system as a result of the potential vulnerability attack. Furthermore, the information associated with the set of possible effects of the potential vulnerability attack further comprises a list of components of the plurality of software components 109A-N and the plurality of hardware components 108A-N which may be affected by the potential vulnerability attack. Advantageously, the processing unit is configured to generate a list of possible effects of the potential vulnerability attack on the automation system 102. Thus, a security consultant is enabled to take appropriate steps to neutralize the potential vulnerability attack.

At step 452, a vulnerability sniffing operation is initiated by the processing unit 202 on the automation system 102 based on the prediction of the potential vulnerability attack and the determined set of possible effects of the potential vulnerability attack. The vulnerability sniffing operation refers to a process of actively scanning the automation system 102 to identify vulnerabilities or weaknesses that could potentially be exploited by malicious actors. Examples of the vulnerability sniffing operation includes, but is not limited to Port Scanning based vulnerability sniffing operation, Vulnerability Scanners based vulnerability sniffing operation, Network Mapping based vulnerability sniffing operation, and Web Application Scanning based vulnerability sniffing operation. The vulnerability sniffing operation is executed to validate a presence of the potential vulnerability attack on the automation system 102.

At step 454, a prediction of the detected vulnerability attack is validated by the processing unit based on a result of the vulnerability sniffing operation. In one example, the result of the vulnerability sniffing operation indicates a presence of a vulnerability in the automation system 102. In such a case, the predicted potential vulnerability attack is validated by the processing unit 202. Advantageously, the processing unit initiates the vulnerability sniffing operation based on the detection of the potential vulnerability attack on the automation system 102.

Aty step 456, a user alert is generated by the processing unit 202 based on the validation of the detected potential vulnerability attack on the automation system 102. In one example, the user alert is at least one of a voice based, a image based or a text based user alert. The vulnerability intelligence module 112 further causes the processing unit 202 to output the generated user alert comprising information about the predicted potential vulnerability attack and the detected set of possible effects of the detected potential vulnerability attack to a user. In one example, the generated user alert is output by the processing unit 202 via an output device such as a computer monitor.

In one example, the generated user alert comprises information associated with the detected potential vulnerability attack. For example, the information associated with the detected potential vulnerability attack comprises information associated with a specific vulnerability of the plurality of vulnerabilities. The information associated with the specific vulnerability includes the vulnerability ID, the Vulnerability Description, the list of Components affected by the vulnerability, the Vulnerability Type, the Severity of the vulnerability, the Exploitability of the vulnerability, the Mitigation Measure deployed in the past to nullify the vulnerability, and the Date at which the vulnerability was exploited by a hacker to conduct at least one vulnerability attack of the plurality of past vulnerability attacks.

In one example, the generated user alert comprises information associated with the predicted potential vulnerability attack. For example, the information associated with the predicted potential vulnerability attack comprises information associated with a specific vulnerability of the plurality of vulnerabilities. The information associated with the specific vulnerability includes the vulnerability ID, the Vulnerability Description, the list of Components affected by the vulnerability, the Vulnerability Type, the Severity of the vulnerability, the Exploitability of the vulnerability, the Mitigation Measure deployed in the past to nullify the vulnerability, and the Date at which the vulnerability was exploited by a hacker to conduct at least one vulberability attack of the plurality of past vulnerability attacks.

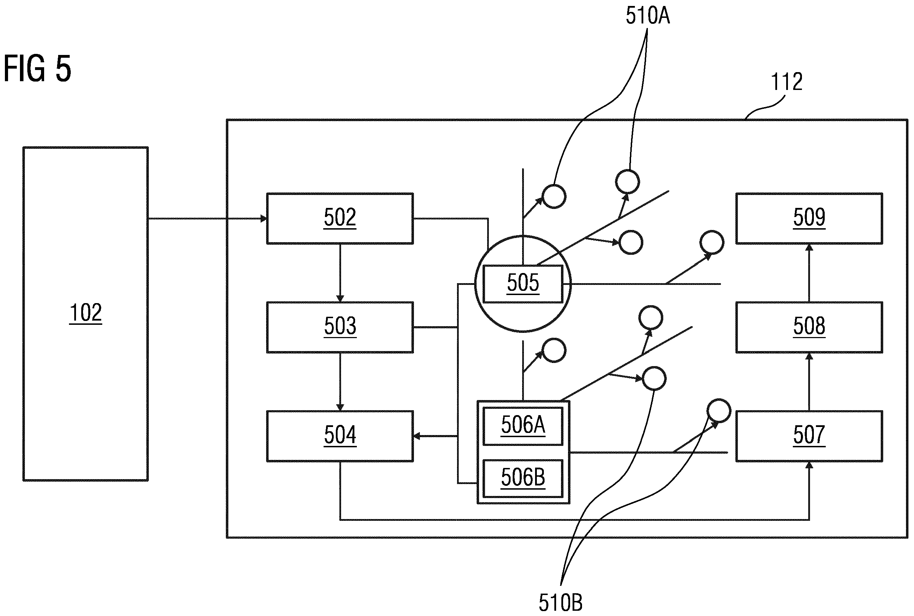

FIG 5 is a schematic representation of an exemplary process of predicting an potential vulnerability attack on an automation system, in accordance to an embodiment of the present invention.

FIG. 5 illustrates the automation system 102 which transmits a set of input parameters and a first set of output parameters to the vulnerability intelligence module 112. At step 502, the processing unit 202 is configured to apply an engineering behavior ontological schema 505 on the set of input parameters and the first set of output parameters to detect at least one anomaly in the first set of output parameters. The engineering behavior ontological schema 505 comprises a plurality of nodes 510A. At step 503, the processing unit 202 is configured to apply a vulnerability intelligence ontological schema 506A on the detected at least one anomaly. The vulnerability intelligence ontological schema 506A comprises a plurality of nodes 510B. Further, at step 503, the processing unit 202 is configured to predict an potential vulnerability attack on the automation system 102 based on the application of the vulnerability intelligence ontological schema 506A on the detected at least one anomaly. Further, at step 504, the processing unit 202 is configured to apply the attack effect ontological schema 506B on the predicted potential vulnerability schema. Further, at step 504, the processing unit 202 is configured to determine a set of possible effects of the predicted potential vulnerability attack on the automation system 102 based on the application of the attack effect ontological schema 506B on the predicted potential vulnerability attack.

At step 507, the processing unit 202 is configured to initiate a vulnerability sniffing operation on the automation system 102. At step 508, the processing unit 202 is configured to validate the prediction of the potential vulnerability attack on the automation system 102. At step 509, the processing unit 202 is configured to generate a user alert based on the predicted potential vulnerability attack on the automation system 102.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### List of references

1. an industrial environment 100
2. an industrial plant 106
3. an artificial intelligence model 126
4. the industrial environment 100
5. an engineering system 102
6. one or more client devices 120A-N
7. the network 104
8. the plurality of hardware components 108A-N
9. the plurality of software components 109A-N
10. a database 118
11. a user interface 122A-N
12. a platform 110
13. vulnerability intelligence module 112
14. a server 114
15. a network interface 116
16. an engineering program 124
17. a processing unit 202
18. an accessible memory 204
19. a storage unit 206
20. a communication interface 208
21. an input-output unit 210
22. a network interface 212
23. a bus 214
24. an integrated development environment (IDE) 216
25. the engineering behavior ontological schema 505
26. the vulnerability intelligence ontological schema 506A
27. the attack effect ontological schema 506B
28. a request handler module 302
29. an analysis module 306
30. a natural language processing module 308
31. an engineering program database 310
32. a validation module 312
33. a deployment module 314

## Claims

1. A method of predicting a vulnerability attack on an automation system, the method comprising:
receiving, by a processing unit (202):
a plurality of engineering data objects associated with the automation system (102), and
information associated with a plurality of past vulnerability attacks on the automation system (102);
analysing, by the processing unit (202), the plurality of engineering data objects and the information associated with the plurality of past vulnerability attacks on the automation system (102);
generating, by the processing unit (202), an engineering behavior ontological schema (505), a vulnerability ontological schema (506A), and an attack effect ontological schema (506B) based on the analysis;
receiving, by the processing unit (202), a set of input parameters and a first set of output parameters associated with the automation system (102);
determining, by the processing unit (202) at least one anomaly in the first set of output parameters based on an analysis of the engineering behavior ontological schema (505), the set of input parameters and the first set of output parameters;
predicting, by the processing unit (202), a potential vulnerability attack on the automation system (102) and a set of possible effects of the potential vulnerability attack on the automation system (102) based on an analysis of the determined at least one anomaly, the vulnerability ontological schema (506A) and the attack effect ontological schema (506B); and
outputting, by the processing unit (202), a user alert comprising information associated with the predicted potential vulnerability attack and the detected set of possible effects of the predicted potential vulnerability attack.

2. The method according to claim 1, wherein generating the engineering behavior ontological schema comprises:
analyzing, by the processing unit (202), the plurality of engineering data objects by application of a natural language processing algorithm on the plurality of engineering data objects;
generating, by the processing unit (202), a first set of tokens from the plurality of engineering data objects based on the analysis, wherein each token of the first set of tokens comprises information associated with a specific data object of the plurality of engineering data objects; and
generating, by the processing unit (202), the engineering behavior ontological schema based on the analysis of the first set of tokens.

3. The method (400) according to claims 1 and 2, further comprising:
applying, by the processing unit (202), a dependency parsing algorithm on the generated first set of tokens to analyze a syntactic structure of interdependencies between one or more tokens of the first set of tokens;
generating, by the processing unit (202), a plurality of dependency trees based on the application of the dependency parsing algorithm; and
generating, by the processing unit (202), the engineering behavior ontological schema based on an analysis of the plurality of dependency trees.

4. The method according to claims 1, 2, and 3, wherein generating the vulnerability ontology schema and the attack effect ontological schema comprises:
analyzing, by the processing unit (202), the plurality of engineering data objects and the information associated with the plurality of past vulnerability attacks on the automation system of the industrial plant (106); and
generating, by the processing unit (202), a second set of tokens from the information associated with the plurality of past vulnerability attacks based on the analysis, wherein each token of the plurality of tokens comprises information associated with a specific past vulnerability attack of the plurality of past vulnerability attacks.

5. The method (400) according to claims 1, 2, 3, and 4, wherein generating the vulnerability ontology schema and the attack effect ontological schema further comprises:
generating, by the processing unit (202), the vulnerability ontological schema and the attack effect ontological schema based on an analysis of the generated second set of tokens.

6. The method (400) according to claims 1, 2, 3, 4, and 5, wherein determining at least one anomaly in the set of input parameters and the first set of output parameters comprises:
applying, by the processing unit, the engineering behavior ontological schema on the received set of input parameters to generate a second set of output parameters for the automation system;
comparing, by the processing unit, the first set of output parameters and the second set of output parameters; and
determining, by the processing unit, the at least one anomaly based on the comparison of the first set of output parameters and the second set of output parameters.

7. The method (400) according to claims 1, 2, 3, 4, 5, and 6, wherein predicting the potential vulnerability attack and the set of possible effects of the potential vulnerability attack comprises:
comparing, by the processing unit (202), the detected at least one anomaly with the plurality of anomalies depicted in the vulnerability ontological schema;
matching, by the processing unit (202), the detected at least one anomaly with a specific node of the vulnerability ontological schema based on the comparison;
predicting, by the processing unit (202), the potential vulnerability attack on the automation system 102 based on an analysis of the specific node of the vulnerability ontological schema;
comparing, by the processing unit (202), the specific node of the vulnerability ontological schema with a second node of the attack effect ontological schema based on an analysis of the detected at least one vulnerability attack and the vulnerability ontological schema;
determining, by the processing unit (202), that the specific node of the vulnerability ontological schema matches with the second node of the attack effect ontological schema; and
detecting, by the processing unit (202), the set of possible effects of the predicted potential vulnerability attack based on the determination.

8. The method according to claims 1 to 7, wherein outputting the user alert further comprises:
initiating, by the processing unit (202), a vulnerability sniffing operation on the automation system (102) based on the prediction of the potential vulnerability attack and the detected set of possible effects of the potential vulnerability attack;
validating, by the processing unit (202), the prediction of the potential vulnerability attack based on a result of the vulnerability sniffing operation;
generating, by the processing unit (202), the user alert based on the validation of the predicted potential vulnerability attack; and
outputting, by the processing unit (202), the generated user alert comprising information about the predicted vulnerability attack and the detected set of possible effects of the predicted potential vulnerability attack.

9. The method according to claims 1 to 8, wherein the engineering behavior ontological schema is a first knowledge graph comprising information associated with a plurality of interrelationships and a plurality of dependencies between a plurality of software components (109A-N) and a performance of a plurality of hardware objects (108AN) associated with the plurality of software components (109A-N) .

10. The method according to claim 1 to 9, wherein the vulnerability ontological schema is a second knowledge graph comprising information associated with a plurality of dependencies between a plurality of anomalies in the plurality of input parameters and the plurality of output parameters, and the plurality of past vulnerability attacks.

11. The method of according to claims 1 to 10, wherein the attack effect ontological schema is a third knowledge graph comprising information associated with a plurality of interrelationships and dependencies between the plurality of past vulnerability attacks on the automation system, and an effect of each of the plurality of past vulnerability attacks on the automation system.

12. An automation system configured to detect vulnerability attacks on the automation system, wherein the automation system comprises:
one or more processor(s) (202); and
a memory (204) coupled to the one or more processor(s), wherein the memory comprises a vulnerability intelligence module (112) stored in the form of machine-readable instructions executable by the one or more processor (s), wherein the vulnerability intelligence module (112) is capable of performing a method according to any of the claims 1-11.

13. A computer-program product, having machine-readable instructions stored therein, that when executed by a processing unit (202), cause the processors to perform a method according to any of the claims 1-11.
